# EUROPEAN PATENT APPLICATION

(11) **EP 4 355 022 A1**
(43) Date of publication of application: **17.04.2024**
(21) Application number: 22836733.0
(22) Date of filing: 23.06.2022
(51) Int. Cl.: H04W 88/02, H04W 76/34, H04W 76/38, H04W 76/00

(54) **DATA PROCESSING METHOD AND APPARATUS**

(30) Priority: 06.07.2021 CN 202110761918; 05.08.2021 CN 202110898812; 29.12.2021 CN 202111635752
(71) Applicant: Huawei Technologies Co., Ltd., Shenzhen, Guangdong 518129 (CN)
(72) Inventor: CAI, Yu, Shenzhen, Guangdong 518129 (CN); XU, Haibo, Shenzhen, Guangdong 518129 (CN); YAO, Chuting, Shenzhen, Guangdong 518129 (CN)
(74) Representative: MERH-IP Matias Erny Reichl Hoffmann Patentanwälte PartG mbB
(86) International application number: PCT/CN2022/100812
(87) International publication number: WO 2023/279979

(57) **Abstract**

This application discloses a data processing method and an apparatus. The method may be applied to a scenario in which a remote UE communicates with a network device via a relay UE. For example, the method includes: If an RRC connection establishment procedure is initialized, if an RRC connection resumption procedure is initialized, or if an RRC connection reestablishment procedure is initialized, the remote UE starts a timer, and if the timer expires, the remote UE sends indication information to the relay UE. The indication information may indicate the relay UE not to forward data corresponding to the remote UE, the indication information is used to release a unicast link between the remote UE and the relay UE, or the indication information indicates to clear a buffer corresponding to the remote UE. The method provided in this application can reduce signaling overheads.

## Description

This application claims priorities to Chinese Patent Application No. 202110761918.8, filed with the China National Intellectual Property Administration on July 6, 2021, and entitled "COMMUNICATION METHOD, UE, AND NETWORK DEVICE", to Chinese Patent Application No. 202110898812.2, filed with the China National Intellectual Property Administration on August 5, 2021, and entitled "DATA PROCESSING METHOD AND APPARATUS", and to Chinese Patent Application No. 202111635752.1, filed with the China National Intellectual Property Administration on December 29, 2021, and entitled "DATA PROCESSING METHOD AND APPARATUS", all of which are incorporated herein by reference in their entireties.

### TECHNICAL FIELD

This application relates to the field of communication technologies, and in particular, to a data processing method and an apparatus.

### BACKGROUND

In the 3^{rd} generation partnership project (3^{rd} generation partnership project, 3GPP) Release (Release) 16, the first version of an NR sidelink (sidelink) is standardized in new radio (new radio, NR) vehicle-to-everything (vehicle-to-everything, V2X, where X can represent everything). This version focuses on supporting V2X-related road safety services. In Release 17, content of NR sidelink relay (relay) is initiated, and a sidelink-based relay function is studied, to improve sidelink or network coverage and improve power efficiency of a user equipment (user equipment, UE), and to consider wider application and services. The NR sidelink relay function specifically includes UE-to-network (UE-to-network) coverage extension, LTE-to-LTE (UE-to-UE) coverage extension, and the like. A proximity based services terminal-to-network relay (proSe UE-to-network relay) function is standardized in Release 13, but cannot be applied to an NR system. In the proximity based services UE-to-network relay function in Release 13, a relay UE may forward, at an internet protocol (internet protocol, IP) layer, data between a remote UE and a network. This is layer-3 (layer-3) relay. However, layer-3 relay and layer-2 (layer-2) relay are considered in NR sidelink relay in Release 17.

Generally, when a remote UE needs to establish an RRC connection with a network device via a relay UE, the remote UE may send an RRC connection request message to a base station via the relay UE, and then the relay UE forwards the request message to the base station. However, when the relay UE is not in an RRC connected state, the relay UE needs to continuously attempt to enter the RRC connected state to forward the request message to the base station. Even if the relay UE cannot enter the RRC connected state, the relay UE still continuously attempts to enter the RRC connected state. As a result, signaling overheads are increased.

### SUMMARY

This application provides a data processing method and an apparatus, to effectively reduce signaling overheads.

According to a first aspect, an embodiment of this application provides a data processing method. The method is applied to a remote terminal device or a chip. The chip is used in the remote terminal device. The remote terminal device communicates with a network device via a relay terminal device. The method includes: if a radio resource control (radio resource control, RRC) connection establishment procedure of the terminal device is initialized, starting a timer; and if the timer expires, sending indication information to the relay terminal device, where the indication information indicates the relay terminal device not to forward data corresponding to the remote terminal device, the indication information is used to release a unicast link between the remote terminal device and the relay terminal device, or the indication information indicates to clear a buffer corresponding to the remote terminal device.

For example, an RRC connection is a connection between the remote terminal device and the network device, and signaling at an RRC layer is end-to-end between the remote terminal device and the network device, and may not pass through a relay UE.

In embodiments of this application, when the timer expires, it indicates that the RRC connection between the remote terminal device and the network device fails. Therefore, the remote terminal device sends the indication information to the relay terminal device, so that the relay terminal device may release the unicast link between the remote terminal device and the relay terminal device in a timely manner, the relay terminal device may clear the buffer corresponding to the remote terminal device, or the relay terminal device may not forward the data carried on a Uu SRB of the remote terminal device. In this way, if the remote terminal device does not successfully enter an RRC connected state, it can be avoided that the relay terminal device still continuously attempts to forward the data between the remote terminal device and the network device or continuously attempts to enter an RRC connected state to provide a relay service for the remote terminal device, or the relay terminal device can leave an RRC connected state as soon as possible (if it is not necessary to provide a relay service for the remote terminal device). Therefore, unnecessary signaling interaction between the relay terminal device and the network device is avoided, and signaling overheads are reduced. In addition, because the relay terminal device does not need to enter the RRC connected state, power consumption can be reduced.

According to a second aspect, an embodiment of this application provides a data processing method. The method is applied to a relay terminal device or a chip. The chip is used in the relay terminal device. A remote terminal device communicates with a network device via the relay terminal device. The method includes: receiving indication information from the remote terminal device, where the indication information indicates the relay terminal device not to forward data corresponding to the remote terminal device, the indication information is used to release a unicast link between the remote terminal device and the relay terminal device, or the indication information indicates to clear a buffer corresponding to the remote terminal device; and processing the indication information.

In embodiments of this application, when the relay terminal device receives the indication information from the remote terminal device, it may indicate that an RRC connection between the remote terminal device and the network device fails. Therefore, the relay terminal device receives the indication information, so that the relay terminal device may release the unicast link between the remote terminal device and the relay terminal device in a timely manner, the relay terminal device may clear the buffer corresponding to the remote terminal device, or the relay terminal device may not forward the data carried on a Uu SRB of the remote terminal device. In this way, if the remote terminal device does not successfully enter an RRC connected state, it can be avoided that the relay terminal device still continuously attempts to forward the data between the remote terminal device and the network device or continuously attempts to enter an RRC connected state to provide a relay service for the remote terminal device, or the relay terminal device can leave an RRC connected state as soon as possible (if it is not necessary to provide a relay service for the remote terminal device). Therefore, unnecessary signaling interaction between the relay terminal device and the network device is avoided, and signaling overheads are reduced. In addition, because the relay terminal device does not need to enter the RRC connected state, power consumption can be reduced.

According to a third aspect, an embodiment of this application provides a data processing method. The method is applied to a relay terminal device or a chip. The chip is used in the relay terminal device. A remote terminal device communicates with a network device via the relay terminal device. The method includes: receiving data carried on a signaling radio bearer (signaling radio bearer, SRB) of the remote terminal device; starting a timer; and if the timer expires, performing any one or more of the following: determining not to forward data corresponding to the remote terminal device; releasing a unicast link between the remote terminal device and the relay terminal device; or clearing a buffer corresponding to the remote terminal device.

In embodiments of this application, the data carried on the SRB of the remote terminal device includes data carried on a Uu SRBO of the remote terminal device and/or data carried on a Uu SRB1 of the remote terminal device. For example, the data carried on the Uu SRBO of the remote terminal device may be data carried on a PC5 radio link control (radio link control, RLC), data carried on a sidelink logical channel, or the like corresponding to the Uu SRBO of the remote terminal device.

It may be understood that when the relay terminal device receives the data carried on the Uu SRB of the remote terminal device, the relay terminal device needs to enter an RRC connected state to forward the data carried on the Uu SRB of the remote terminal device. Therefore, the timer is started, so that the relay terminal device can learn whether the relay terminal device successfully forwards the data carried on the Uu SRB of the remote terminal device. When the timer expires, the relay terminal device may determine that the relay terminal device does not successfully forward the data carried on the Uu SRB of the remote terminal device. When the timer expires, it indicates that forwarding is not successfully performed. Therefore, entering of the RRC connected state by the remote terminal device may be affected. Therefore, the relay terminal device may release the unicast link between the remote terminal device and the relay terminal device in a timely manner, the relay terminal device may clear the buffer corresponding to the remote terminal device, or the relay terminal device may no longer forward the data carried on the Uu SRB of the remote terminal device. Therefore, unnecessary signaling interaction between the relay terminal device and the network device is avoided, and signaling overheads are reduced. In addition, because the relay terminal device does not need to enter the RRC connected state, power consumption can be reduced.

According to a fourth aspect, an embodiment of this application provides a data processing method. The method is applied to a remote terminal device or a chip. The chip is used in the remote terminal device. The remote terminal device communicates with a network device via a relay terminal device. The method includes: receiving third indication information from the relay terminal device, where the third indication information indicates that an RRC connection between the relay terminal device and the network device is unavailable; and sending first indication information to the relay terminal device, where the first indication information indicates the relay terminal device not to forward data corresponding to the remote terminal device, the first indication information is used to release a unicast link between the remote terminal device and the relay terminal device, or the first indication information indicates to clear a buffer corresponding to the remote terminal device.

In embodiments of this application, the remote terminal device receives the third indication information from the relay terminal device, so that the remote terminal device can obtain information about the RRC connection of the relay terminal device in a timely manner. Therefore, it can be flexibly determined whether the remote terminal device continues interacting with the network device via the relay terminal device or the remote terminal device can re-interact with the network device in a timely manner (for example, communicate with the network device via another relay terminal device). Further, a delay in entering an RRC connected state by the remote terminal device can be effectively reduced.

According to a fifth aspect, an embodiment of this application provides a data processing method. The method is applied to a relay terminal device or a chip. The chip is used in the relay terminal device. A remote terminal device communicates with a network device via the relay terminal device. The method includes: sending third indication information to the remote terminal device, where the third indication information indicates that a radio resource control RRC connection between the relay terminal device and the network device is unavailable; and receiving first indication information from the remote terminal device, where the first indication information indicates the relay terminal device not to forward data corresponding to the remote terminal device, the first indication information is used to release a unicast link between the remote terminal device and the relay terminal device, or the first indication information indicates to clear a buffer corresponding to the remote terminal device.

In embodiments of this application, the remote terminal device receives the third indication information from the relay terminal device, so that the remote terminal device can obtain information about the RRC connection of the relay terminal device in a timely manner. Therefore, it can be flexibly determined whether the remote terminal device continues interacting with the network device via the relay terminal device or the remote terminal device can re-interact with the network device in a timely manner (for example, communicate with the network device via another relay terminal device). Further, a delay in entering an RRC connected state by the remote terminal device can be effectively reduced. In addition, the relay terminal device receives the first indication information, so that the relay terminal device may release the unicast link between the remote terminal device and the relay terminal device in a timely manner, the relay terminal device may clear the buffer corresponding to the remote terminal device, or the relay terminal device may not forward the data carried on a Uu SRB of the remote terminal device. This effectively reduces power consumption.

According to a sixth aspect, an embodiment of this application provides a communication apparatus, configured to perform the method according to the first aspect or the fourth aspect. The communication apparatus includes a unit that performs the method according to the first aspect or the fourth aspect.

For example, the communication apparatus may be a remote terminal device or a chip. The chip may be used in the remote terminal device.

According to a seventh aspect, an embodiment of this application provides a communication apparatus, configured to perform the method according to the second aspect, the third aspect, or the fifth aspect. The communication apparatus includes a unit that performs the method according to the second aspect, the third aspect, or the fifth aspect.

For example, the communication apparatus may be a relay terminal device or a chip. The chip may be used in the relay terminal device.

In the sixth aspect or the seventh aspect, the communication apparatus may include a transceiver unit and a processing unit. For specific descriptions of the transceiver unit and the processing unit, refer to the apparatus embodiments provided below.

According to an eighth aspect, an embodiment of this application provides a communication apparatus. The communication apparatus includes a processor, configured to perform the method according to the first aspect or the fourth aspect. Alternatively, the processor is configured to execute a program stored in a memory. When the program is executed, the method according to the first aspect or the fourth aspect is performed.

In a possible implementation, the memory is located outside the communication apparatus.

In a possible implementation, the memory is located inside the communication apparatus.

In embodiments of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

In embodiments of this application, the communication apparatus may be a remote terminal device or a chip. The chip may be used in the remote terminal device or the like.

According to a ninth aspect, an embodiment of this application provides a communication apparatus. The communication apparatus includes a processor, configured to perform the method according to the second aspect, the third aspect, or the fifth aspect. Alternatively, the processor is configured to execute a program stored in a memory. When the program is executed, the method according to the second aspect, the third aspect, or the fifth aspect is performed.

In a possible implementation, the memory is located outside the communication apparatus.

In a possible implementation, the memory is located inside the communication apparatus.

In embodiments of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

In embodiments of this application, the communication apparatus may be a relay terminal device or a chip. The chip is used in the relay terminal device.

According to a tenth aspect, an embodiment of this application provides a communication apparatus. The communication apparatus includes a logic circuit and an interface. The logic circuit is coupled to the interface. The interface is configured to input and/or output a code instruction. The logic circuit is configured to execute the code instruction, so that the method according to the first aspect or the fourth aspect is performed.

According to an eleventh aspect, an embodiment of this application provides a communication apparatus. The communication apparatus includes a logic circuit and an interface. The logic circuit is coupled to the interface. The interface is configured to input and/or output a code instruction. The logic circuit is configured to execute the code instruction, so that the method according to the second aspect, the third aspect, or the fifth aspect is performed.

According to a twelfth aspect, an embodiment of this application provides a computer-readable storage medium. The computer-readable storage medium is configured to store a computer program. When the computer program is run on a computer, the method according to the first aspect or the fourth aspect is performed.

According to a thirteenth aspect, an embodiment of this application provides a computer-readable storage medium. The computer-readable storage medium is configured to store a computer program. When the computer program is run on a computer, the method according to the second aspect, the third aspect, or the fifth aspect is performed.

According to a fourteenth aspect, an embodiment of this application provides a computer program product. The computer program product includes a computer program or computer code. When the computer program product runs on a computer, the method according to the first aspect or the fourth aspect is performed.

According to a fifteenth aspect, an embodiment of this application provides a computer program product. The computer program product includes a computer program or computer code. When the computer program product runs on a computer, the method according to the second aspect, the third aspect, or the fifth aspect is performed.

According to a sixteenth aspect, an embodiment of this application provides a computer program. When the computer program is run on a computer, the method according to the first aspect or the fourth aspect is performed.

According to a seventeenth aspect, an embodiment of this application provides a computer program. When the computer program is run on a computer, the method according to the second aspect, the third aspect, or the fifth aspect is performed.

According to an eighteenth aspect, an embodiment of this application provides a wireless communication system. The wireless communication system includes a remote terminal device and a relay terminal device.

Optionally, the remote terminal device is configured to perform the method according to any one of the first aspect or the possible implementations of the first aspect. The relay terminal device is configured to perform the method according to any one of the second aspect or the possible implementations of the second aspect.

Optionally, the remote terminal device is configured to perform the method according to any one of the fourth aspect or the possible implementations of the fourth aspect. The relay terminal device is configured to perform the method according to any one of the fifth aspect or the possible implementations of the fifth aspect.

### BRIEF DESCRIPTION OF DRAWINGS

FIG. 1a and FIG. 1b are schematic diagrams of a communication system according to an embodiment of this application;
FIG. 2 to FIG. 13 each are a schematic flowchart of a data processing method according to an embodiment of this application; and
FIG. 14 to FIG. 16 each are a schematic diagram of a structure of a communication apparatus according to an embodiment of this application.

### DESCRIPTION OF EMBODIMENTS

To make the objectives, technical solutions, and advantages of this application clearer, this application is further described with reference to the accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units is not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. The character "/" usually indicates an "or" relationship between associated objects. "At least one of the following" or a similar expression thereof means any combination of these items. For example, at least one of a, b, or c may represent: a, b, c, "a and b", "a and c", "b and c", or "a and b and c".

A method provided in this application may be applied to various communication systems, for example, an internet of things (internet of things, IoT) system, a narrow band internet of things (narrow band internet of things, NB-IoT) system, a long term evolution (long term evolution, LTE) system, a 5^{th} generation (5^{th} generation, 5G) communication system, and a new communication system (for example, 6G) emerging in future communication development. In addition, the method provided in this application may be further applied to a wireless local area network (wireless local area network, WLAN) system, for example, wireless-fidelity (wireless-fidelity, Wi-Fi) and the like.

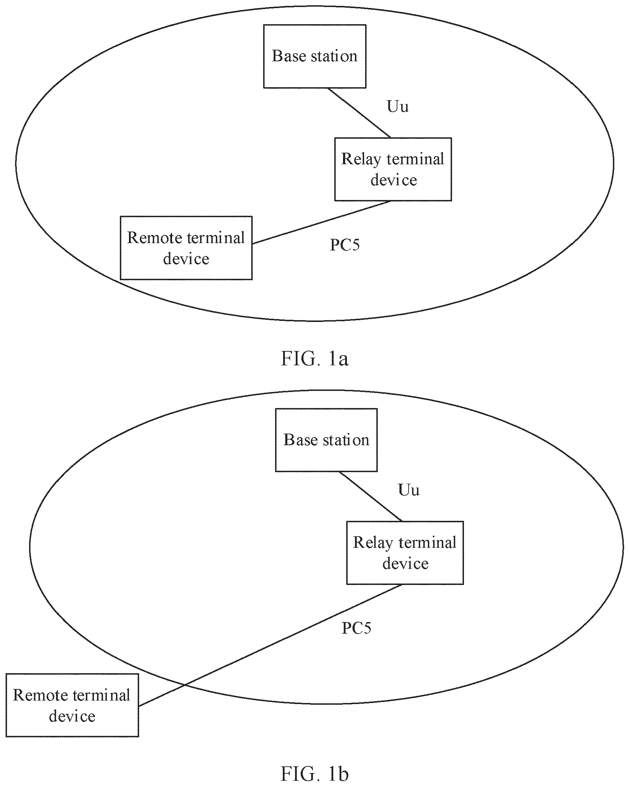

Technical solutions provided in this application may be further applied to machine type communication (machine type communication, MTC), a long term evolution-machine (long term evolution-machine, LTE-M), a device-to-device (device-to-device, D2D) network, a machine to machine (machine to machine, M2M) network, an internet of things (internet of things, IoT) network, a proximity based services (proximity based services, ProSe) network, or another network. The IoT network may include, for example, an internet of vehicles. A communication mode in the internet of vehicles system is collectively referred to as a vehicle-to-everything (vehicle-to-everything, V2X, X can represent everything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like. For example, in FIG. 1a and FIG. 1b shown below, a terminal device may communicate with a terminal device by using a D2D technology, an M2M technology, a V2X technology, a ProSe technology, or the like.

An embodiment of this application provides a communication system. The method embodiments shown below in this application may be applicable to the communication system. The communication system may include at least one network device, at least one relay terminal device, and at least one remote terminal device.

The network device may be a next generation nodeB (next generation nodeB, gNB), a next generation evolved nodeB (next generation evolved nodeB, ng-eNB) (which may be referred to as an eNB for short), a network device in future 6G communication, or the like. The network device may be any device with a wireless transceiver function, including but not limited to the base station described above. Alternatively, the base station may be a base station in a future communication system, for example, a 6^{th} generation communication system. Optionally, the network device may be an access node, a wireless relay node, a wireless backhaul node, or the like in a wireless local area network (wireless-fidelity, Wi-Fi) system. Optionally, the network device may be a radio controller in a cloud radio access network (cloud radio access network, CRAN) scenario. Optionally, the network device may be a wearable device, an in-vehicle device, or the like. Optionally, the network device may alternatively be a small cell, a transmission reception point (transmission reception point, TRP) (or may also be referred to as a transmission point), or the like. It may be understood that the network device may alternatively be a base station or the like in a future evolved public land mobile network (public land mobile network, PLMN).

The relay terminal device may also be referred to as the foregoing relay terminal device, or may be referred to as a relay user equipment (relay user equipment, relay UE) or proximity based services terminal-to-network relay (proSe UE-to-network relay). The remote terminal device may also be referred to as a remote user equipment (remote UE) or the like. For example, both the relay terminal device and the remote terminal device may be terminal devices. The terminal device is described as follows:

For example, the terminal device may also be referred to as a user equipment (user equipment, UE), a terminal, or the like. The terminal device is a device having a wireless transceiver function. The device may be deployed on land, including an indoor or outdoor device or a hand-held, wearable, or vehicle-mounted device, may be deployed on a water surface, for example, on a ship, or may be deployed in air, for example, on an aircraft or a balloon. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medicine (remote medicine), a wireless terminal in a smart grid (smart grid), a wireless terminal in transportation safety (transportation safety), a wireless terminal in a smart city (smart city), a wireless terminal in a smart home (smart home), or the like. It may be understood that the terminal device may alternatively be a terminal device in a future 6G network, a terminal device in a future evolved PLMN, or the like. Optionally, the terminal device shown in this application may include a vehicle (for example, an entire vehicle) in the internet of vehicles, and may also include an in-vehicle device or an in-vehicle terminal (including T-box or a host in the internet of vehicles system) in the internet of vehicles or the like. A specific form of the terminal device used in the internet of vehicles is not limited in this application. It may be understood that the foregoing descriptions about the terminal device are also applicable to the relay terminal device and the remote terminal device.

FIG. 1a and FIG. 1b each are a schematic diagram of a communication system according to an embodiment of this application. As shown in FIG. 1a and FIG. 1b, a remote terminal device is connected to a base station via a relay terminal device, or a remote terminal device receives paging or system information via a relay terminal device. In the communication system shown in FIG. 1a, the remote terminal device may be in coverage (that is, in-coverage) of the base station. In the communication system shown in FIG. 1b, the remote terminal device may be out of coverage (that is, out-of-coverage) of the base station.

For example, in layer-2 relay, the relay terminal device may perform relaying based on a packet data convergence protocol (packet data convergence protocol, PDCP) layer or a protocol layer (for example, a backhaul adaptation protocol (backhaul adaptation protocol, BAP) layer (which may also be referred to as an adaptation layer) or a radio link control (radio link control, RLC) layer) below the PDCP layer. An access network device and the remote terminal device may have equivalent PDCP layers, equivalent service data adaptation protocol (service data adaptation protocol, SDAP) layers, equivalent RRC layers, and the like. A radio link control (radio link control, RLC) layer, a media access control (media access control, MAC) layer, and a physical (physical, PHY) layer are end-to-end between the remote terminal device and the relay terminal device and between the relay terminal device and the access network device. The remote terminal device and the access network device may establish an RRC connection, and may exchange an RRC message via the relay terminal device. In this case, it may be considered that the remote terminal device communicates with the access network device via the relay terminal device.

D2D communication based on cellular networks is also referred to as proximity based services (proximity based services, ProSe) in the 3^{rd} generation partnership project (the 3^{rd} generation partnership project, 3GPP), and is a technology in which terminal devices directly communicate with each other under control of a network. This technology can increase spectral efficiency of a cellular communication system, reduce transmit power of a terminal device, and resolve a problem of insufficient spectrum resources in a wireless communication system to some extent. Proximity based services direct communication is direct communication between two or more neighboring ProSe-enabled UEs via no network node. The proximity based services direct communication may be implemented through a sidelink communication (sidelink communication) access layer function.

Further descriptions of the remote terminal device and the relay terminal device may be as follows:

The remote terminal device may communicate with the network device via the relay terminal device under any one or more of the following conditions:

The remote terminal device is far away from the network device; the remote terminal device is out of coverage of the network device; the remote terminal device is located at an edge of coverage of the network device; a link between the remote terminal device and the network device is poor in quality; the remote terminal device cannot be directly served by the network device; no Uu interface is disposed for the remote terminal device; the remote terminal device does not support a protocol or an entity at a radio link control (radio link control, RLC) layer, a medium access control (medium access control, MAC) layer, or a physical (physical, PHY) layer on a Uu interface; the remote terminal device is low in battery level; the remote terminal device is in an energy-saving mode; or the remote terminal device expects to reduce power consumption. The foregoing Uu interface is an interface between the terminal device and a radio access network (for example, a next generation (next generation, NG)-RAN, an evolved universal mobile telecommunications system terrestrial radio access network (evolved universal mobile telecommunications system terrestrial radio access network, E-UTRAN), or the like).

The relay terminal device may be a terminal device that provides network access for the remote terminal device, that is, the relay terminal device may provide a relay service for the remote terminal device. That the relay terminal device provides a relay service for the remote terminal device may be understood as that information, data, or the like sent by the remote terminal device to the network device may be forwarded to the network device by the relay terminal device, and information, data, or the like sent by the network device to the remote terminal device may be forwarded to the remote terminal device by the relay terminal device.

For brevity of this application, in the following descriptions, the relay terminal device is referred to as a relay UE, and the remote terminal device is referred to as a remote UE.

Generally, after a PCS unicast link (which may also be referred to as a PCS unicast connection) is established between the remote UE and the relay UE, the relay UE may provide a relay service for the remote UE. Therefore, sidelink (sidelink) communication is performed between the remote UE and the relay UE, and an interface between the remote UE and the relay UE is a PCS interface. After the PCS unicast link (PCS unicast link) is established, a corresponding PCS radio resource control (radio resource control, RRC) connection (PCS RRC connection) is established. That is, there is a one-to-one correspondence between PCS RRC connections and PCS unicast links. Therefore, the remote UE and the relay UE may perform sidelink unicast communication. For sidelink unicast communication, the PCS RRC connection is a logical connection in a source (source) and destination (destination) pair (source and destination pair). For example, the source may be a sender (sender) of data in sidelink unicast communication, and the destination may be a target (target) or a receiver of data in sidelink unicast communication.

The following describes an RRC connection in this application. It may be understood that the following describes the RRC connection by using a UE as an example. However, the UE may include a relay UE, or may include a remote UE. That is, the descriptions of the RRC connection in this application are applicable to the remote UE and the relay UE.

When the UE is in an RRC idle (idle) state, if an upper layer (which may also be referred to as a higher layer of the UE) of an RRC layer of the UE requests to establish the RRC connection, the UE may initialize (which may also be referred to as starting, initiating, or the like) an RRC connection establishment procedure. Once the UE initializes the RRC connection establishment procedure, the UE may perform any one or more of the following:
performing a unified access control (unified access control, UAC) (which may also be referred to as unified access control) process;
applying a default layer-1 (layer-1, L1) parameter value;
applying a default MAC cell group configuration (MAC cell group configuration);
applying a common control channel (common control channel, CCCH) configuration;
starting (which may also be referred to as turning on or the like) a timer T300; or
initializing transmission of an RRC setup request (RRCSetupRequest) message.

Optionally, once the UE receives an RRC setup (RRCSetup) message from a base station, the UE stops the timer T300. Optionally, once the UE receives an RRC reject (RRCReject) message from the base station, the UE stops the timer T300 and may further reset MAC, release the default MAC cell group configuration, and indicate to the higher layer that RRC connection establishment fails, that is, the RRC connection establishment procedure ends. If wait time (wait time) (which may also be referred to as waiting duration) is configured in the RRC reject message, the UE starts a timer T302, and sets a value of the timer T302 to the wait time. If the timer T300 expires, the UE may also reset the MAC, release the MAC configuration, reestablish radio link control (radio link control, RLC) of an established radio bearer (radio bearer, RB), and indicate to the higher layer that RRC connection establishment fails, that is, the RRC connection establishment procedure ends. It may be understood that the timer T300 and the timer T302 described in this application are merely examples. For example, the timer T300 is used to time the RRC connection establishment procedure of the UE. For another example, the timer T302 is used to time the wait time of the UE. The timer T300 and/or the timer T302 described in this application may alternatively be another timer with a corresponding function, or the like. This is not limited in this application. A starting condition and a stopping condition of the another timer with a corresponding function may be the same as those of the timer T300 or the timer T302.

It may be understood that a value of the T300 may be configured by using a system information block (system information block, SIB), or the like. This is not limited in this application.

Optionally, the foregoing timer T300 is described by using an example in which the UE initializes the RRC connection establishment procedure. If the UE needs to initialize an RRC connection resumption procedure, a corresponding timer may include a timer T319. When a response message of an RRC connection resumption request message is received from the base station, the timer T319 is stopped. If the UE needs to initialize an RRC connection reestablishment procedure, a corresponding timer may include a timer T301. When a response message of an RRC connection reestablishment request message is received from the base station, the timer T301 is stopped. For specific descriptions of the RRC connection resumption procedure or the RRC connection reestablishment procedure of the UE, refer to a related standard, a related protocol, or the like. Details are not described herein. It may be understood that the timer T319 and the timer T301 described in this application are merely examples. For example, the timer T319 is used to time the RRC connection resumption procedure of the UE. For another example, the timer T301 is used to time the RRC connection reestablishment procedure of the UE. Therefore, the timer T319 and/or the timer T301 described in this application may alternatively be another timer with a corresponding function, or the like. This is not limited in this application. A starting condition and a stopping condition of the another timer with a corresponding function may be the same as those of the timer T319 or the timer T301.

Once the UE initializes the RRC connection establishment procedure, if the upper layer of the RRC layer of the UE provides an access category (access category) and one or more access identities (access identities) when requesting to establish the RRC connection, a unified access control procedure is performed. If the UE determines that an access attempt is barred (barred), the RRC connection establishment procedure ends. For example, in the unified access control procedure, if the timer T390 corresponding to the access category is running, it indicates that the access attempt is barred. Otherwise, if the timer T302 is running and the access category is neither "2" nor "0", it indicates that the access attempt is barred. Optionally, the UE may perform an access barring check (access barring check) on the access category, and a result of the check may include that an access attempt is barred. In this case, it indicates that the access attempt of the RRC connection of the UE is barred, and the RRC connection establishment procedure ends. Otherwise, the RRC connection establishment procedure continues. In the access barring check, if it is considered that the access attempt of the access category is barred, the T390 corresponding to the access category is started. The foregoing access category "2" represents emergency (emergency), and the access category "0" represents mobile station-initiated signaling resulting from paging (MO signaling resulting from paging). Optionally, the access category may further include "1", indicating access other than emergency or abnormal data initiated by a mobile station. It may be understood that, in the access barring check, if the timer T302 expires or is stopped, and the T390 corresponding to the access category is not running, it is considered that the barring of the access category is alleviated (alleviated) (which may also be referred to as released or the like).

It may be understood that the value of the timer T302 may be the wait time carried in the RRC reject message. Duration of the timer T390 may be determined based on a random number that is generated by the UE. A method for determining the duration of the timer T302 and the duration of the timer T390 is not limited in this application. It may be understood that the timer T302 and the timer T390 described in this application are merely examples. The timer T302 and/or the timer T390 described in this application may alternatively be another timer with a corresponding function, or the like. This is not limited in this application. A manner of setting a value of the another timer with a corresponding function may be the same as that of the timer T302 or the timer T390 described above.

Generally, before performing user plane data transmission, the remote UE needs to establish a packet data network (packet data network, PDU) session (PDU session) and a data radio bearer (data radio bearer, DRB) with a network. The remote UE needs to establish an RRC connection with the base station. Before the remote UE establishes a Uu RRC connection with the network via the relay UE, the remote UE and the relay UE need to establish the PCS unicast link. Then, the remote UE sends the RRC setup request message to the base station via the relay UE. The RRC setup request message may also be referred to as a first RRC message for establishing the RRC connection between the remote UE and the base station. The base station sends the RRC setup (RRCSetup) message (for example, which may also be referred to as a response message of the RRC setup request message) to the remote UE via the relay UE. The remote UE sends an RRC setup complete (RRCSetup Complete) message to the base station via the relay UE, to indicate that the RRC connection establishment procedure between the remote UE and the base station ends.

However, when the remote UE starts to establish the RRC connection with the base station via the relay UE, if the relay UE is not in an RRC connected (RRC connected) state, for example, the relay UE is in an RRC idle state, the relay UE needs to attempt to establish an RRC connection with the base station. In this case, an RRC connection establishment failure or RRC access barring may occur on the relay UE. For another example, if the relay UE is in an RRC inactive (RRC inactive) state, the relay UE needs to attempt to resume an RRC connection to the base station. In this case, an RRC resumption failure or RRC access barring may occur on the relay UE. For another example, if the relay UE is in an RRC connected state and a radio link failure (radio link failure, RLF) occurs, the relay UE needs to attempt to reestablish an RRC connection with the base station. In this case, an RRC connection failure or the like may occur on the relay UE. In the foregoing case, whether the relay UE continues forwarding data (for example, an RRC message) between the remote UE and the base station needs to be resolved urgently. For example, in the foregoing case, the relay UE still attempts to establish an RRC connection when the relay UE cannot establish an RRC connection with the base station. As a result, the relay UE cannot forward the RRC setup request message to the base station in a timely manner, and an access delay of the remote UE is increased. In addition, signaling overheads are increased (for example, the relay UE continuously attempts to enter the RRC connected state and continuously initiates an RRC connection establishment procedure).

It may be understood that the foregoing descriptions are provided by using an example in which the remote UE starts to establish the RRC connection with the base station via the relay UE. This application is also applicable to the scenario in which the remote UE starts to resume the RRC connection to the base station via the relay UE, the scenario in which the remote UE starts to reestablish the RRC connection with the base station via the relay UE, or other scenarios.

In view of this, this application provides a data processing method and an apparatus, to effectively alleviate the following situation: For example, the relay UE cannot enter the RRC connected state and therefore cannot forward data from the remote UE to the base station in a timely manner or forward data from the base station to the remote UE in a timely manner, the relay UE still continuously attempts to establish an RRC connection with the base station, the relay UE still continuously attempts to resume an RRC connection to the base station, or the relay UE still continuously attempts to reestablish an RRC connection with the base station. According to the method provided in this application, if the relay UE cannot enter the RRC connected state and therefore cannot forward data from the remote UE to the base station in a timely manner or forward data from the base station to the remote UE, the remote UE interacts with the relay UE, so that it can be avoided that the relay terminal device still continuously attempts to forward the data between the remote terminal device and the network device or continuously attempts to enter an RRC connected state to provide a relay service for the remote terminal device, or the relay terminal device can leave an RRC connected state as soon as possible (if it is not necessary to provide a relay service for the remote terminal device). Therefore, unnecessary signaling interaction between the relay terminal device and the network device is avoided, and signaling overheads are reduced. In addition, because the relay terminal device does not need to enter the RRC connected state, power consumption can be reduced. Optionally, the relay UE interacts with the remote UE, so that the remote UE can obtain RRC connection information of the relay UE in a timely manner and therefore can flexibly determine whether to continue interacting with the base station via the relay UE, and re-interact with the base station in a timely manner, so that a delay in entering an RRC connected state is reduced.

In the method provided in this application, if the remote UE starts RRC connection establishment (or RRC connection resumption, or RRC connection reestablishment) via the relay UE, and the relay UE is not in the RRC connected state, that is, the RRC connection establishment failure, access barring, or the like occurs on the relay UE, the following two parts are considered in this application:

First, whether the relay UE continues attempting to forward data carried on a Uu RB of the remote UE.

The Uu RB in this application includes a Uu signaling radio bearer (signaling radio bearer, SRB) and/or a Uu data radio bearer (data radio bearer, DRB). The Uu RB of the remote UE is an end-to-end radio bearer on a Uu interface between the remote UE and the base station. For example, a Uu SRB of the remote UE includes any one or more of the following: a Uu SRBO of the remote UE or a Uu SRB1 of the remote UE.

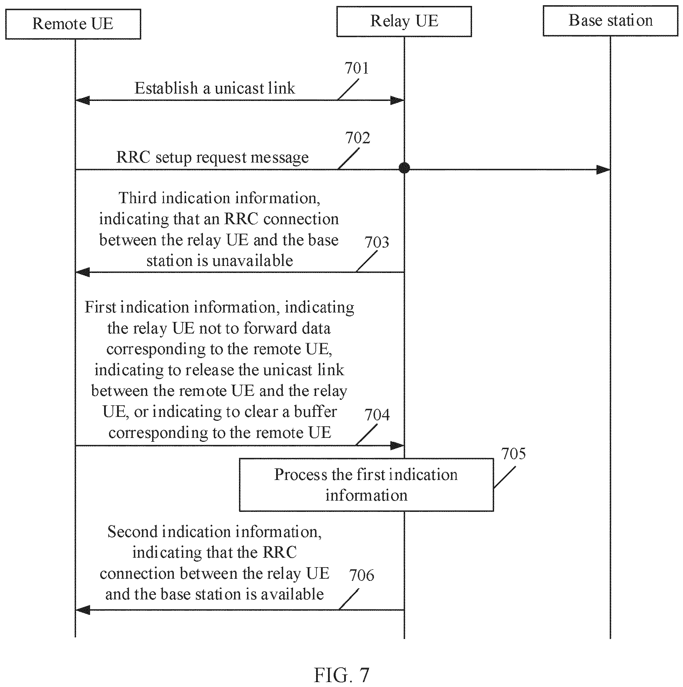

Optionally, the relay UE continues attempting to forward the data carried on the Uu RB of the remote UE. The relay UE continues starting RRC connection establishment to forward the data carried on the Uu RB of the remote UE. If an RRC connection of the relay UE is successfully established, the relay UE forwards data carried on the Uu SRBO of the remote UE. To enable the relay UE to continue forwarding the data carried on the Uu RB of the remote UE, the relay UE needs to continue buffering the data carried on the Uu RB of the remote UE and does not clear the data carried on the Uu RB of the remote UE after the RRC connection establishment failure occurs on the relay UE. For descriptions of this case, refer to the method shown in FIG. 7 below.

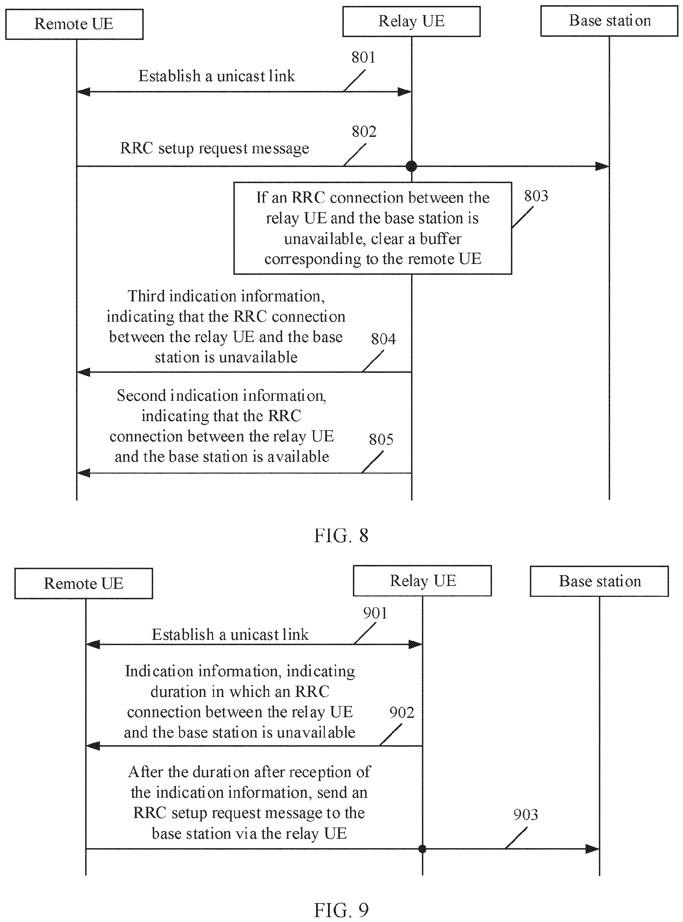

Optionally, the relay UE no longer forwards the data carried on the Uu RB of the remote UE. The relay UE clears the data carried on the Uu RB of the remote UE. The relay UE does not continue starting RRC connection establishment to forward the data carried on the Uu RB of the remote UE. For descriptions of this case, refer to the method shown in FIG. 8 below.

Second, whether the relay UE notifies the remote UE that an RRC connection of the relay UE is unavailable.

Optionally, the relay UE notifies the remote UE that the RRC connection of the relay UE is unavailable (which may also be referred to as that the RRC connection between the relay UE and the base station is unavailable). The relay UE may send indication information to the remote UE, where the indication information indicates that the RRC connection of the relay UE is unavailable. Optionally, the relay UE indicates a reason why the RRC connection is unavailable. Optionally, the relay UE indicates duration in which the RRC connection is unavailable. Optionally, the relay UE sends a unicast link release request message to the remote UE, so that the relay UE and the remote UE release the PCS unicast link.

Optionally, the relay UE does not notify the remote UE that the RRC connection of the relay UE is unavailable.

It may be understood that the RRC connection being unavailable described in this application includes an RRC connection failure, an RRC connection establishment failure, an RRC connection reestablishment failure, an RRC connection resumption failure, or RRC access barring. In the following descriptions, an RRC connection of the relay UE is an RRC connection between the relay UE and the base station, and an RRC connection of the remote UE is an RRC connection between the remote UE and the base station.

The following describes in detail a data processing method provided in embodiments of this application.

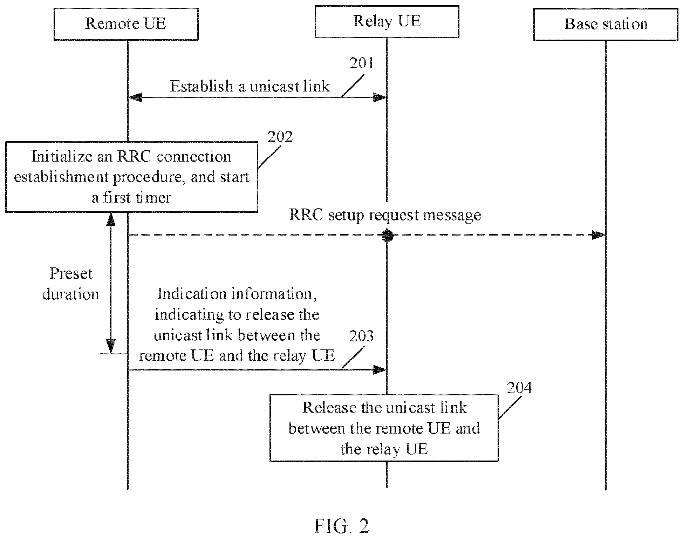

FIG. 2 is a schematic flowchart of a data processing method according to an embodiment of this application.

In embodiments of this application, after a remote UE starts to enter an RRC connected state (for example, establish an RRC connection, resume an RRC connection, or reestablish an RRC connection) via a relay UE, if the remote UE does not successfully enter the RRC connected state (for example, an RRC establishment failure, an RRC resumption failure, an RRC reestablishment failure, or an RRC connection failure), a procedure of entering the RRC connected state by the remote UE ends. In this case, if the relay UE continues forwarding the data between the remote UE and the base station, unnecessary signaling sending is caused (for example, signaling overheads are increased), or received signaling is misunderstood by the remote UE. For example, after the RRC connection of the remote UE fails, an RRC connection establishment procedure is initiated again. In this case, if the remote UE receives a response message from the base station, the remote UE may not perform effective distinguishing, that is, the remote UE may misunderstand the received signaling.

As shown in FIG. 2, the method includes the following steps.

201: The remote UE establishes a unicast link with the relay UE.

For example, the unicast link may also be referred to as a PCS unicast link or the like. For example, the remote UE sends a direct communication request message (direct communication request message) to the relay UE, where the direct communication request message is used to request to establish the unicast link with the relay UE. The relay UE sends a direct communication accept message (direct communication accept message) to the remote UE. In this way, the remote UE establishes the unicast link with the relay UE. It may be understood that a method for establishing the unicast link is not limited in embodiments of this application. The remote UE establishes the unicast link with the relay UE, that is, a PCS RRC connection is established.

Because there is a one-to-one correspondence between PCS RRC connections and PCS unicast links, the foregoing step 201 may be further represented as: The remote UE establishes the PCS RRC connection with the relay UE.

202: The remote UE initializes an RRC connection establishment procedure, and starts a first timer.

For example, when the remote UE is in an RRC idle state, if a higher layer of the remote UE requests to establish the RRC connection, the remote UE may initialize the RRC connection establishment procedure. Once the remote UE initializes the RRC connection establishment procedure, the remote UE may start the first timer. If the remote UE initializes the RRC connection establishment procedure, it may also be understood that once the remote UE initializes the RRC connection establishment procedure, the remote UE may send an RRC setup request message to the base station via the relay UE (a dashed line shown in FIG. 2). The RRC setup request message is used to request to establish the RRC connection with the base station. For example, when the remote UE is in the RRC idle state, the remote UE may send the RRC setup request message to the base station via the relay UE. After the remote UE receives an RRC setup message sent by the base station, the remote UE may enter the RRC connected state. The foregoing RRC setup request message may be carried on a Uu SRBO of the remote UE.

It may be understood that, that the remote UE sends the RRC setup request message to the base station via the relay UE may be understood as follows:

The remote UE and the base station have equivalent RRC layers, and an RRC message between the remote UE and the base station may be understood as end-to-end. The relay UE may perform relaying based on a packet data convergence protocol (packet data convergence protocol, PDCP) layer, a protocol layer (for example, an adaptation layer (adaptation layer) or an RLC layer) below the PDCP layer, or the like. Optionally, the remote UE, the relay UE, and the base station may all use a layer-2 relay technology.

If the remote UE establishes the RRC connection via the relay UE, the foregoing timer may be stopped when the following condition is satisfied: The remote UE receives the RRC setup message from the base station via the relay UE, or the remote UE receives an RRC reject message from the base station via the relay UE. In other words, the remote UE may start the first timer when initializing the RRC connection establishment procedure, and then stop the first timer when receiving a response message of the RRC setup request message from the base station via the relay UE. It may be understood that after the remote UE receives the response message such as the RRC setup message or the RRC reject message from the base station via the relay UE, it indicates that the RRC connection establishment procedure of the remote UE ends.

Optionally, a value of the first timer may be configured by the base station based on an SIB, may be pre-negotiated, may be predefined by a protocol, or may be configured by the relay UE. This is not limited in embodiments of this application.

Optionally, the value of the first timer used when the remote UE establishes the RRC connection with the base station via the relay UE and a value of a second timer (for example, T300) used when a UE directly establishes an RRC connection with the base station (the UE does not establish the RRC connection via the relay UE) may be the same or different. The value of the timer in embodiments of this application may also be understood as timing duration or the like of the timer. The first timer and the second timer may be a same timer, or may be different timers.

Optionally, the value of the first timer is a first value, and the value of the second timer is a second value. For example, the first value may be greater than or equal to the second value. In an example, the base station may separately configure the value of the first timer and the value of the second timer. Alternatively, the base station configures the value of the second timer, and the relay UE configures the value of the first timer. In another example, the base station may configure the value of the second timer and an offset of the first timer relative to the second timer. For example, the base station may configure the first value and an offset 1. The value of the first timer may be a sum of the first value and the offset 1, a difference between the first value and the offset 1, or the like. In another example, the base station may configure the value of the first timer, an offset of the second timer relative to the first timer, and the like. A method for configuring the value of the first timer and the value of the second timer is not limited in embodiments of this application. It may be understood that the difference between the first value and the offset 1 may include a difference obtained by subtracting the offset 1 from the first value, and the like. A method described below is similar.

Optionally, if the remote UE establishes the RRC connection with the base station via the relay UE, a first timer used when the relay UE is in an RRC connected state and a first timer used when the relay UE is in an RRC idle state or an RRC inactive state may be different timers or have different values. For example, the relay UE in the RRC connected state corresponds to a timer 1. The relay UE in the RRC idle state or the RRC inactive state corresponds to a timer 2. For example, the timer 1 and the timer 2 may be understood as different timers. For another example, the timer 1 and the timer 2 may be a same timer, but a value of the timer 1 is different from a value of the timer 2. For example, the value of the timer 1 is a third value, and the value of the timer 2 is a fourth value. In an example, the base station may separately configure the value of the timer 1 and the value of the timer 2. Alternatively, the relay UE separately configures the value of the timer 1 and the value of the timer 2. In another example, the base station may configure the value of the timer 1 and an offset of the timer 2 relative to the timer 1. For example, the base station may configure the third value and an offset 2. The value of the timer 2 may be a sum of the third value and the offset 2, a difference between the third value and the offset 2, or the like. In another example, the base station may configure the value of the timer 2 and an offset of the timer 1 relative to the timer 2. For example, the base station may configure the fourth value and an offset 3. The value of the timer 1 is a sum of the fourth value and the offset 3, a difference between the fourth value and the offset 3, or the like. Optionally, the base station may separately configure the value of the timer 1, the value of the timer 2, and the value of the second timer. In an example, the base station may separately configure the value of the timer 1, the offset of the timer 2 relative to the timer 1, and the value of the second timer. For example, the base station configures the third value, the offset 2, and the second value. The value of the timer 2 is the sum of the third value and the offset 2, the difference between the third value and the offset 2, or the like. In another example, the base station may configure the value of the second timer, an offset of the timer 1 relative to the second timer, and an offset of the timer 2 relative to the second timer. For example, the base station configures the second value, an offset 4, and an offset 5. In this case, the value of the timer 1 is a sum of the second value and the offset 4, a difference between the second value and the offset 4, or the like. The value of the timer 2 is a sum of the second value and the offset 5, a difference between the second value and the offset 5, or the like. In another example, the base station configures the value of the second timer, an offset of the timer 1 relative to the second timer, and the offset of the timer 2 relative to the timer 1. In another example, the base station configures the value of the second timer, an offset of the timer 2 relative to the second timer, and the offset of the timer 1 relative to the timer 2. It may be understood that the foregoing method is merely an example, and other configuration manners are not described in detail one by one in embodiments of this application.

To enable the remote UE to obtain the value of the first timer, the relay UE may indicate an RRC status of the relay UE to the remote UE, for example, any one of the following: the RRC connected state, the RRC idle state, or the RRC inactive state. The remote UE determines the value of the timer based on the indicated RRC status of the relay UE. Alternatively, the relay UE indicates the value of the first timer to the remote UE based on the RRC status of the relay UE. This is not limited in embodiments of this application. It may be understood that the foregoing descriptions of the timer may be coupled with the method shown in FIG. 2, or the foregoing timer may be a separate embodiment, or the like. This is not limited in embodiments of this application.

Optionally, the method shown in FIG. 2 may also be applied to the scenario in which the remote UE resumes the RRC connection to the base station via the relay UE, the scenario in which the remote UE reestablishes the RRC connection with the base station via the relay UE, or other scenarios. That is, step 202 may also be represented as: The remote UE initializes an RRC connection resumption procedure, and starts a first timer; the remote UE initializes an RRC connection reestablishment procedure, and starts a first timer; or the remote UE initializes a procedure of entering the RRC connected state, and starts a first timer. The entering the RRC connected state includes at least one of the following: RRC connection establishment, RRC connection resumption, or RRC connection reestablishment. Optionally, for different procedures, values of first timers used in the different procedures may be the same. Optionally, for different procedures, values of first timers used in the different procedures may be different. Optionally, for at least two procedures, values of first timers may be the same.

For example, if the remote UE initializes the RRC connection reestablishment procedure, or the remote UE selects or reselects a relay UE, the first timer is started. For another example, the remote UE initializes the RRC connection resumption procedure, and starts the first timer. If an RRC reconfiguration failure, a PCS radio link failure, or the like occurs on the remote UE, the remote UE needs to reestablish the RRC connection, that is, the remote UE initializes the RRC connection reestablishment procedure. Optionally, if the RRC connection reestablishment procedure is initialized, the remote UE may select or reselect the relay UE. That is, the remote UE may start the first timer after selecting or reselecting the relay UE in reestablishing the RRC connection via the relay UE. It may be understood that the remote UE may alternatively start the first timer after selecting or reselecting the relay UE in reestablishing the RRC connection via the relay UE and after obtaining system information of a serving cell of the relay UE. If the remote UE selects or reselects the relay UE, it may also be understood that once the remote UE selects or reselects the relay UE, the remote UE may send an RRC reestablishment request message to the base station via the relay UE. If the remote UE is in an RRC inactive state, the higher layer or an access stratum (access stratum, AS) of the remote UE requests to resume the RRC connection, that is, the remote UE initializes the RRC connection resumption procedure. If the remote UE initializes the RRC connection resumption procedure, it may also be understood that once the remote UE initializes the RRC connection resumption procedure, the remote UE may send an RRC resumption request message to the base station via the relay UE.

If the remote UE resumes the RRC connection to the base station via the relay UE (RRC resume), the first timer may be stopped when the following condition is satisfied: The remote UE receives an RRC resumption message from the base station via the relay UE, the remote UE receives an RRC reject message from the base station via the relay UE, the remote UE receives the RRC setup message (for example, the base station does not obtain a UE context of the remote UE) from the base station via the relay UE, or the remote UE receives an RRC release message from the base station via the relay UE. That is, the remote UE may start the first timer when initializing the RRC connection resumption procedure, and then stop the first timer when receiving an RRC connection resumption response message from the base station via the relay UE. It may be understood that after the remote UE receives the response message such as the RRC resumption message or the RRC reject message from the base station, the RRC connection resumption procedure of the remote UE ends.

For example, the first timer used when the remote UE resumes the RRC connection to the base station via the relay UE may be a timer T319, or may be another timer, or the like. This is not limited in embodiments of this application. The value of the first timer used when the remote UE resumes the RRC connection to the base station via the relay UE and a value of a timer T319 used when a UE directly resumes an RRC connection to the base station (the UE does not resume the RRC connection via the relay UE) may be the same or different. It may be understood that for descriptions of the first timer used when the remote UE resumes the RRC connection to the base station via the relay UE and the timer used when the UE directly resumes the RRC connection to the base station, refer to the foregoing descriptions of the RRC connection establishment procedure performed by the remote UE with the base station via the relay UE and the RRC connection establishment procedure directly performed by the UE with the base station. Details are not described herein again.

If the remote UE reestablishes the RRC connection with the base station via the relay UE (RRC reestablishment), the first timer may be stopped when the following condition is satisfied: The remote UE receives an RRC reestablishment message from the base station via the relay UE, or the remote UE receives the RRC setup message from the base station via the relay UE. That is, the remote UE may start the first timer when initializing the RRC connection reestablishment procedure, and then stop the first timer when receiving an RRC connection reestablishment response message from the base station via the relay UE. It may be understood that after the remote UE receives the response message such as the RRC reestablishment message or the RRC setup message from the base station via the relay UE, the RRC connection reestablishment procedure of the remote UE ends. If the first timer is started after the remote UE selects or reselects the relay UE in reestablishing the RRC connection via the relay UE or after the remote UE selects or reselects the relay UE in reestablishing the RRC connection via the relay UE and obtains the system information of the serving cell of the relay UE, the first timer is stopped after the remote UE receives the RRC reestablishment message from the base station via the relay UE or after the remote UE receives the RRC setup message from the base station via the relay UE. If the remote UE initializes the RRC connection reestablishment procedure and starts the first timer, the remote UE stops the first timer after selecting or reselecting the relay UE. It may be understood that the remote UE may alternatively stop the first timer after selecting or reselecting the relay UE and establishing a unicast connection with the relay UE. The remote UE may alternatively stop the first timer after selecting or reselecting the relay UE and obtaining the system information of the serving cell of the relay UE. The remote UE may alternatively stop the first timer after selecting or reselecting the relay UE, establishing a unicast connection with the relay UE, and obtaining the system information of the serving cell of the relay UE. That the remote UE selects the relay UE includes any one of the following: (1) The remote UE continues using the relay UE connected when RRC connection reestablishment is initialized; (2) the remote UE is not connected to a relay UE when initializing RRC connection reestablishment, and selects a relay UE after initializing RRC connection reestablishment; or (3) the remote UE is connected to a first relay UE when initializing RRC connection reestablishment, and reselects a second relay UE after initializing RRC connection reestablishment, where the second relay UE and the first relay UE may be the same or different.

For example, the timer used when the remote UE reestablishes the RRC connection with the base station via the relay UE may be T301, or may be another timer, or the like. This is not limited in embodiments of this application. The value of the first timer used when the remote UE reestablishes the RRC connection with the base station via the relay UE and a value of T301 used when a UE directly reestablishes an RRC connection with the base station (the UE does not reestablish the RRC connection via the relay UE) may be the same or different. It may be understood that for descriptions of the first timer used when the remote UE reestablishes the RRC connection with the base station via the relay UE and the timer used when the UE directly reestablishes the RRC connection with the base station, refer to the foregoing descriptions of the RRC connection establishment procedure performed by the remote UE with the base station via the relay UE and the RRC connection establishment procedure directly performed by the UE with the base station. Details are not described herein again. Herein, the timer used when the remote UE reestablishes the RRC connection with the base station via the relay UE may be the first timer started after the remote UE selects or reselects the relay UE in reestablishing the RRC connection via the relay UE or the first timer started after the remote UE selects or reselects the relay UE in reestablishing the RRC connection via the relay UE and obtains the system information of the serving cell of the relay UE.

For example, when the remote UE reestablishes the RRC connection with the base station via the relay UE, the first timer started when the remote UE initializes the RRC connection reestablishment procedure may be T311, or may be another timer, or the like. This is not limited in embodiments of this application. The value of the first timer used when the remote UE reestablishes the RRC connection with the base station via the relay UE and a value of T311 used when a UE directly reestablishes an RRC connection with the base station (the UE does not reestablish the RRC connection via the relay UE) may be the same or different. It may be understood that for descriptions of the first timer used when the remote UE reestablishes the RRC connection with the base station via the relay UE and the timer used when the UE directly reestablishes the RRC connection with the base station, refer to the foregoing descriptions of the RRC connection establishment procedure performed by the remote UE with the base station via the relay UE and the RRC connection establishment procedure directly performed by the UE with the base station. Details are not described herein again.

203: If the first timer expires, the remote UE sends indication information to the relay UE, where the indication information indicates to release the unicast link between the remote UE and the relay UE. Correspondingly, the relay UE receives the indication information.

If the first timer expires may also be understood as: when the first timer expires, once the first timer expires, or the like. The indication information may also be understood as: The indication information is used to request to release the unicast link between the remote UE and the relay UE.

Optionally, the indication information may be a unicast link release request message, for example, a disconnect request (disconnect request) message. That is, the indication information may be used to release the unicast link between the remote UE and the relay UE. If the first timer expires, an RRC layer of the remote UE notifies the higher layer (for example, a ProSe layer, a V2X layer, or a NAS layer) that establishment of the RRC connection fails. In this case, the higher layer triggers sending the indication information to the relay UE.

Optionally, the indication information indicates to release the PCS RRC connection between the remote UE and the relay UE. For example, the indication information may be a PCS RRC connection release request message.

Optionally, the indication information may be included in a PCS RRC message, the indication information may be a PCS RRC message, the indication information may be a PCS-S message, or the indication information may be included in a PCS-S message. This is not limited in embodiments of this application. For example, the remote UE sends the PCS RRC message to the relay UE, where the message indicates that establishment of the RRC connection between the remote UE and the base station fails. The message may further include indication information for indicating that establishment of the RRC connection between the remote UE and the base station times out, indication information for indicating that the base station rejects RRC connection establishment of the remote UE, or the like.

Optionally, the indication information may indicate that the procedure of entering the RRC connected state by the remote UE ends, the indication information may indicate that the remote UE no longer enters the RRC connected state via the relay UE, the indication information may indicate that the remote UE fails to enter the RRC connected state, the indication information may indicate that the remote UE times out to enter the RRC connected state, or the indication information may indicate that the base station rejects entering of the RRC connected state by the remote UE. The entering the RRC connected state includes at least one of the following: RRC connection establishment, RRC connection resumption, or RRC connection reestablishment. Alternatively, the indication information indicates that the relay UE reestablishes or releases a PCS RLC corresponding to a Uu RB of the remote UE.

Optionally, the indication information may indicate that the RRC connection establishment procedure between the remote UE and the base station ends, the indication information may indicate that the remote UE no longer establishes the RRC connection with the base station via the relay UE, the indication information may indicate that establishment of the RRC connection between the remote UE and the base station fails, the indication information may indicate that establishment of the RRC connection between the remote UE and the base station times out, or the indication information may indicate that the base station rejects RRC connection establishment of the remote UE.

Optionally, the indication information may indicate that the RRC connection resumption procedure between the remote UE and the base station ends, the indication information may indicate that the remote UE no longer resumes the RRC connection with the base station via the relay UE, the indication information may indicate that resumption of the RRC connection between the remote UE and the base station fails, the indication information may indicate that resumption of the RRC connection between the remote UE and the base station times out, or the indication information may indicate that the base station rejects RRC connection resumption of the remote UE.

Optionally, the indication information may indicate that the RRC connection reestablishment procedure between the remote UE and the base station ends, the indication information may indicate that the remote UE no longer reestablishes the RRC connection with the base station via the relay UE, the indication information may indicate that reestablishment of the RRC connection between the remote UE and the base station fails, the indication information may indicate that reestablishment of the RRC connection between the remote UE and the base station times out, or the indication information may indicate that the base station rejects RRC connection reestablishment of the remote UE.

Optionally, if the first timer expires, the remote UE may further reestablish or release the PCS RLC corresponding to the Uu RB, and/or the remote UE rel eases a sidelink logical channel corresponding to the Uu RB of the remote UE.

Optionally, if the first timer expires, the remote UE may trigger reselecting a relay UE. The remote UE may establish an RRC connection, reestablish an RRC connection, and resume an RRC connection with the base station via the reselected relay UE. The remote UE may reselect one relay UE. A serving cell of the reselected relay UE is different from the serving cell of the current relay UE. The remote UE reselects the relay UE, so that a success rate of entering the RRC connection by the remote UE can be increased, and a delay in entering the RRC connected state by the remote UE can be reduced.

Optionally, before the first timer expires, the remote UE receives the RRC reject message from the base station via the relay UE, or the remote UE receives the RRC release message from the base station via the relay UE. It indicates that the remote UE fails to enter the RRC connected state via the relay UE, and the remote UE may trigger reselecting a relay UE. The remote UE may establish an RRC connection, reestablish an RRC connection, and resume an RRC connection with the base station via the reselected relay UE. The remote UE may reselect one relay UE. A serving cell of the reselected relay UE is different from the serving cell of the current relay UE. The remote UE reselects the relay UE, so that a success rate of entering the RRC connection by the remote UE can be increased, and a delay in entering the RRC connected state by the remote UE can be reduced.

For example, the foregoing step 202 and step 203 may also be understood as:
The remote UE initializes the RRC connection establishment procedure, and determines whether the response message (for example, the RRC setup message or the RRC reject message) from the base station is received within preset duration for initializing the RRC connection establishment procedure; and if the response message is not received, the remote UE sends the indication information to the relay UE. For example, a relationship between the first timer and the preset duration may be described as follows: Timing duration of the first timer is the preset duration, the value of the first timer is the preset duration, or a timing length of the first timer is the preset duration.

It may be understood that whenever the first timer maintained by the remote UE expires, and regardless of whether the relay UE successfully establishes an RRC connection with the base station, whether the relay UE successfully forwards the RRC setup request message to the base station, whether the relay UE receives the response message sent by the base station to the remote UE, or the like, the remote UE sends the indication information to the relay UE. This is not limited in embodiments of this application.

204: The relay UE releases the unicast link between the remote UE and the relay UE.

For example, if the relay UE releases the unicast link between the remote UE and the relay UE, the relay UE deletes a context of the unicast link between the remote UE and the relay UE. A ProSe layer or a V2X layer of the relay UE notifies an AS layer that the unicast link is released. The AS layer of the relay UE discards a configuration related to sidelink communication with the remote UE, releases the PCS RLC between the relay UE and the remote UE, and releases the sidelink SRB between the relay UE and the remote UE.

Optionally, step 204 may also be understood as: The relay UE releases a PCS RRC connection between the remote UE and the relay UE. The AS layer of the relay UE discards a configuration related to sidelink communication with the remote UE, releases the PCS RLC between the relay UE and the remote UE, and releases a sidelink SRB between the relay UE and the remote UE. The AS layer of the relay UE notifies the ProSe layer or the V2X layer that the PCS RRC connection is released. Optionally, the relay UE may further reestablish or release a Uu RLC corresponding to the Uu RB of the remote UE. The relay UE may further release a Uu logical channel corresponding to the Uu RB of the remote UE.

Optionally, the relay UE indicates to the base station that the procedure of entering the RRC connected state by the remote UE ends. The relay UE may further indicate, to the base station, an identifier of the remote UE whose procedure of entering the RRC connected state ends. After receiving the indication, the base station indicates the relay UE to reestablish or release the Uu RLC corresponding to the Uu RB of the remote UE, and/or release the Uu logical channel corresponding to the Uu RB of the remote UE.

Optionally, after the unicast link between the remote UE and the relay UE is released, the remote UE may establish a PCS unicast link and a PCS RRC connection with another relay UE, so that the remote UE may enter the RRC connected state via the another relay UE, for example, establish an RRC connection. Optionally, after the unicast link between the remote UE and the relay UE is released, if the remote UE expects to continue sending a message to the base station via the relay UE, the remote UE needs to reestablish the unicast link and the PCS RRC connection with the relay UE.

The foregoing step 204 may also be understood as: The relay UE processes the indication information, or the relay UE performs processing based on the indication information, or the like.

In embodiments of this application, if the first timer expires, it indicates that the RRC connection between the remote UE and the base station fails (or the RRC connection establishment procedure fails, the RRC connection resumption procedure fails, the RRC connection reestablishment procedure fails, or the like).

For example, if the remote UE initializes the RRC connection establishment procedure and starts the first timer, and the first timer expires, establishment of the RRC connection between the remote UE and the base station fails. The RRC layer of the remote UE notifies the higher layer (for example, the non-access stratum layer (non-access stratum layer, NAS layer)) that establishment of the RRC connection fails. The RRC connection establishment procedure of the remote UE ends.

For example, if the first timer is started after the remote UE initializes the RRC connection reestablishment procedure, after the remote UE selects or reselects the relay UE in reestablishing the RRC connection via the relay UE, or after the remote UE selects or reselects the relay UE in reestablishing the RRC connection via the relay UE and obtains the system information of the serving cell of the relay UE, and if the first timer expires, reestablishment of the RRC connection between the remote UE and the base station fails. The RRC layer of the remote UE notifies the higher layer (for example, the non-access stratum layer (non-access stratum layer, NAS layer)) that the RRC connection fails. The remote UE returns to the RRC idle state. The RRC connection reestablishment procedure of the remote UE ends.

For example, if the remote UE initializes the RRC connection resumption procedure and starts the first timer, and the first timer expires, resumption of the RRC connection between the remote UE and the base station fails. The RRC layer of the remote UE notifies the higher layer (for example, the non-access stratum layer (non-access stratum layer, NAS layer)) that resumption of the RRC connection fails. The remote UE returns to the RRC idle state. The RRC connection resumption procedure of the remote UE ends.

The remote UE sends the indication information to the relay UE, so that the relay UE can release the unicast link between the remote UE and the relay UE in a timely manner. The remote UE may select another relay UE to perform an RRC connection to the base station. According to the method provided in embodiments of this application, if the remote UE does not successfully enter the RRC connected state, it can be avoided that the relay UE still needs to continuously attempt to unnecessarily forward the data between the remote UE and the base station or continuously attempts to enter the RRC connected state to provide a relay service for the remote UE, or the relay UE can leave the RRC connected state as soon as possible. This can reduce signaling overheads, and also reduce power consumption. Optionally, misunderstanding caused when the remote UE still receives the response message of the base station after the procedure of entering the RRC connection fails can also be avoided. Optionally, the remote UE may reselect the relay UE, so that the remote UE can be connected to the base station in a timely manner, an access delay of the remote UE is reduced, and a service can be performed faster.

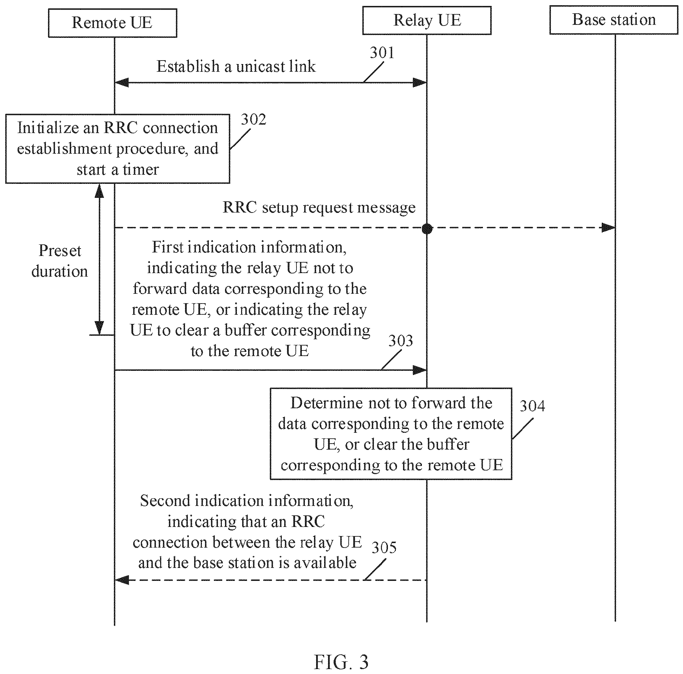

FIG. 3 is a schematic flowchart of another data processing method according to an embodiment of this application. As shown in FIG. 3, the method includes the following steps.

301: A remote UE establishes a unicast link with a relay UE.

302: The remote UE initializes an RRC connection establishment procedure, and starts a timer.

For descriptions of step 301 and step 302, refer to step 201 and step 202 shown in FIG. 2. Details are not described herein again.

303: If the timer expires, the remote UE sends first indication information to the relay UE, where the first indication information indicates the relay UE not to forward data corresponding to the remote UE (which may also be referred to as that the first indication information indicates not to establish an RRC connection via the relay UE, or that the first indication information indicates that the relay UE is not required to forward the data corresponding to the remote UE), or the first indication information indicates the relay UE to clear a buffer corresponding to the remote UE. Correspondingly, the relay UE receives the first indication information.

Optionally, the first indication information indicates the relay UE to discard the data corresponding to the remote UE, the first indication information indicates the relay UE to reestablish or release a PCS RLC corresponding to a Uu RB of the remote UE, or the first indication information indicates the relay UE to release data carried on a sidelink logical channel corresponding to a Uu RB of the remote UE. It may be understood that forwarding data carried on the Uu RB of the remote UE may be forwarding an RLC SDU corresponding to the Uu RB of the remote UE. Forwarding data carried on a Uu SRB of the remote UE may be forwarding an RLC SDU corresponding to the Uu SRB of the remote UE.

Reestablishing or releasing the PCS RLC corresponding to the Uu RB of the remote UE includes discarding all RLC service data units (service data units, SDUs) and RLC protocol data units (protocol data units, PDUs). The data corresponding to the remote UE is the data carried on the Uu RB of the remote UE. The buffer corresponding to the remote UE may be a buffer of the data carried on the Uu RB of the remote UE. The Uu radio bearer (radio bearer, RB) in this application includes the Uu signaling radio bearer (signaling radio bearer, SRB) and a Uu data radio bearer (data radio bearer, DRB). The Uu RB of the remote UE is an end-to-end radio bearer on a Uu interface between the remote UE and a base station. The data carried on the Uu SRB of the remote UE includes an RRC setup request message, an RRC resumption request message, an RRC reestablishment request message, an RRC setup message, an RRC resumption message, an RRC reestablishment message, an RRC reject message, an RRC release message, and the like.

It may be understood that after the relay UE reestablishes or releases the PCS RLC corresponding to the Uu RB of the remote UE, after the relay UE releases the sidelink logical channel corresponding to the Uu RB of the remote UE, or after the relay UE clears the buffer corresponding to the remote UE, the relay UE does not forward the data corresponding to the remote UE.

It may be understood that, in embodiments of this application, regardless of whether the relay UE determines not to forward the data corresponding to the remote UE or clears the buffer corresponding to the remote UE, the unicast link between the relay UE and the remote UE may still exist. When the remote UE needs to send the RRC setup request message to the base station again via the relay UE, the remote UE may directly send the RRC setup request message to the relay UE. It may be understood that for descriptions of the first indication information, refer to the indication information shown in FIG. 2. Details are not described one by one herein again. For example, the first indication information may indicate that an RRC connection establishment procedure between the remote UE and the base station ends, the first indication information indicates that an RRC connection resumption procedure between the remote UE and the base station ends, or the indication information indicates that an RRC connection reestablishment procedure between the remote UE and the base station ends. That is, the descriptions of the indication information shown in FIG. 2 are also applicable to the method shown in FIG. 3. A difference is that in the method shown in FIG. 2, after receiving the indication information, the relay UE releases the unicast link between the relay UE and the remote UE. However, in the method shown in FIG. 3, after receiving the indication information, the relay UE may not forward the data corresponding to the remote UE, or may clear the buffer corresponding to the remote UE, or the like.

When the remote UE does not receive a response message from the base station within preset duration via the relay UE, the timer may expire. A value of the timer is the preset duration (which may also be referred to as that timing duration of the timer is the preset duration). For example, a reason why the remote UE does not receive the RRC setup message or the RRC reject message from the base station within the preset duration via the relay UE may include:
1. The base station is faulty and cannot respond to the RRC setup request message from the remote UE in a timely manner.
2. A delay in responding to the RRC setup request message by the base station is long. As a result, the remote UE cannot receive a response message of the RRC setup request message in a timely manner.
3. An RRC connection between the relay UE and the base station fails. As a result, the relay UE cannot forward the RRC setup request message to the base station.
4. It takes a long time to establish an RRC connection between the relay UE and the base station. As a result, the relay UE cannot forward the RRC setup request message to the base station in a timely manner.

In other words, if the timer expires, the relay UE may have forwarded the RRC setup request message, but may not forward, in a timely manner, the response message sent by the base station to the remote UE, that is, the response message may be buffered in the relay UE. Alternatively, if the timer expires, the relay UE has not forwarded the RRC setup request message to the base station, that is, the RRC setup request message is buffered in the relay UE.

It may be understood that, for the foregoing 3 and 4, if the relay UE does not receive the first indication information, the relay UE continues attempting to establish the RRC connection with the base station, or continues attempting to forward the RRC setup request message to the base station. Therefore, a power consumption loss of the relay UE may be increased. In addition, the relay UE still cannot successfully forward the RRC setup request message to the base station.

It may be understood that the foregoing descriptions about the reason why the remote UE does not receive the RRC setup message or the RRC reject message from the base station within the preset duration are also applicable to the method shown in FIG. 2, FIG. 4, FIG. 5, or the like.

304: The relay UE determines not to forward the data corresponding to the remote UE, or the relay UE clears the buffer corresponding to the remote UE.

That the relay UE determines not to forward the data corresponding to the remote UE may also be understood as: The relay UE does not forward the data corresponding to the remote UE. Alternatively, the foregoing step 304 may also be understood as: The relay UE processes the first indication information, or the relay UE performs processing based on the first indication information, or the like.

After receiving the first indication information, the relay UE may perform one or more of the following operations:

The relay UE does not forward the data corresponding to the remote UE, the relay UE clears the buffer corresponding to the remote UE, the relay UE discards the data corresponding to the remote UE, the relay UE reestablishes or releases the PC5 RLC corresponding to the Uu RB of the remote UE, or the relay UE releases the sidelink logical channel corresponding to the Uu RB of the remote UE.

Optionally, the relay UE may further reestablish or release a Uu RLC corresponding to the Uu RB of the remote UE, the relay UE may further release a Uu logical channel corresponding to the Uu RB of the remote UE, the relay UE indicates to the base station that a procedure of entering an RRC connected state by the remote UE ends, or the relay UE may indicate, to the base station, an identifier of the remote UE whose procedure of entering an RRC connected state ends. After receiving the indication, the base station indicates the relay UE to reestablish or release the Uu RLC corresponding to the Uu RB of the remote UE, and/or release the Uu logical channel corresponding to the Uu RB of the remote UE.

In a possible implementation, the method shown in FIG. 3 further includes the following step.

305: The relay UE sends second indication information to the remote UE, where the second indication information indicates that the RRC connection between the relay UE and the base station is available. Correspondingly, the remote UE receives the second indication information.

The relay UE sends the second indication information to the remote UE, so that the remote UE can learn that the relay UE has entered an RRC connected state, and the remote UE may forward, to the base station via the relay UE, data carried on a Uu SRBO. For example, in the foregoing step 305, when the relay UE determines not to forward the data corresponding to the remote UE, the relay UE may forward the data corresponding to the remote UE after entering the RRC connected state. For another example, in the foregoing step 305, when the relay UE releases the buffer corresponding to the remote UE, the relay UE sends the second indication information to the remote UE, and if the remote UE further needs to establish the RRC connection with the base station after receiving the second indication information, the remote UE may resend the RRC setup request message.

According to the method provided in embodiments of this application, if the remote UE does not successfully enter the RRC connected state, it can be avoided that the relay UE still needs to continuously attempt to unnecessarily forward the data between the remote UE and the base station or continuously attempts to enter the RRC connected state to provide a relay service for the remote UE, or the relay UE can leave the RRC connected state as soon as possible. This can reduce signaling overheads, and also reduce power consumption. Optionally, misunderstanding caused when the remote UE still receives an RRC message of the base station after the procedure of entering the RRC connection fails can also be avoided. Optionally, the remote UE may reselect a relay UE, so that the remote UE can be connected to the base station in a timely manner, an access delay of the remote UE is reduced, and a service can be performed faster. Optionally, when the remote UE enters the RRC connected state again via the relay UE, the remote UE may not need to establish the unicast link again. This reduces a delay. In addition, the unicast link between the remote UE and the relay UE may also be used for ProSe direct communication.

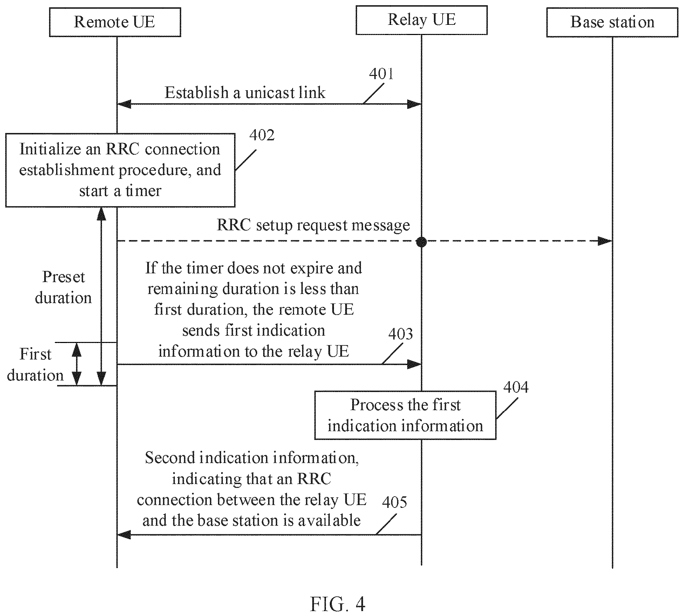

FIG. 4 is a schematic flowchart of still another data processing method according to an embodiment of this application. As shown in FIG. 4, the method includes the following steps.

401: A remote UE establishes a unicast link with a relay UE.

402: The remote UE initializes an RRC connection establishment procedure, and starts a first timer.

403: If the first timer does not expire and remaining duration is less than first duration, the remote UE sends first indication information to the relay UE. The first indication information indicates the relay UE not to forward data corresponding to the remote UE, the first indication information indicates to clear a buffer corresponding to the remote UE, or the first indication information indicates to release the unicast link between the remote UE and the relay UE. Correspondingly, the relay UE receives the first indication information.

Generally, a transmission delay exists between the remote UE and the relay UE. Therefore, the first duration may be equal to or less than the transmission delay. For example, when the remaining duration of the first timer is less than the first duration, even if the relay UE receives a response message sent by a base station to the remote UE, due to the delay in forwarding the response message by the relay UE to the remote UE, the remote UE cannot receive the response message within the first duration. Therefore, the remote UE sends the first indication information to the relay UE, so that the relay UE does not continue forwarding the data corresponding to the remote UE. If the remote UE does not send the first indication information, the relay UE may continue performing forwarding. In this case, the first timer of the remote UE has expired, that is, an RRC connection procedure of the remote UE has ended. The response message forwarded by the relay UE is useless, or even may be misunderstood by the remote UE.

Optionally, if the first timer does not expire and the remaining duration is less than the first duration, the remote UE may further reestablish or release a PCS RLC corresponding to a Uu RB, and/or the remote UE releases a sidelink logical channel corresponding to the Uu RB of the remote UE.

It may be understood that for specific descriptions of the first timer, refer to the timers shown in FIG. 2 and FIG. 3. Details are not described herein again.

Optionally, the foregoing step 403 may be further represented as:

If a second timer expires, the remote UE sends the first indication information to the relay UE. Correspondingly, the relay UE receives the first indication information.

The second timer and the first timer have a same starting condition and/or stopping condition. A value of the second timer is less than a value of the first timer. For example, the value of the second timer may be configured in SIB, predefined, or configured by the relay UE. Optionally, if the second timer expires, the remote UE may further reestablish or release the PCS RLC corresponding to the Uu RB, and/or the remote UE releases a sidelink logical channel corresponding to the Uu RB of the remote UE. It may be understood that the second timer shown in FIG. 4 may be the same as or different from the second timer shown in FIG. 2.

Optionally, the foregoing step 403 may be further represented as:

If the remote UE receives an RRC reject message from the base station via the relay UE, the remote UE sends the first indication information to the relay UE, where the first indication information indicates to release the unicast link between the remote UE and the relay UE.

If the remote UE receives an RRC reject message from the base station via the relay UE may also be understood as once the remote UE receives an RRC reject message from the base station via the relay UE.

If the remote UE receives the RRC reject message from the base station via the relay UE, it indicates that establishment of an RRC connection between the remote UE and the base station fails. Therefore, the first indication information is sent to the relay UE, so that the relay UE can release the unicast link between the relay UE and the remote UE. It may be understood that before the remote UE receives the RRC reject message from the base station, the first timer does not expire.

If the remote UE receives the RRC reject message from the base station via the relay UE, the remote UE may reestablish or release the PCS RLC corresponding to the Uu RB, and/or the remote UE releases the sidelink logical channel corresponding to the Uu RB of the remote UE.

Optionally, the foregoing step 403 may be further represented as:

If a procedure of entering an RRC connected state is terminated, the remote UE sends the first indication information to the relay UE, where the first indication information indicates to release the unicast link between the remote UE and the relay UE.

The entering an RRC connected state includes at least one of the following: RRC connection establishment, RRC connection resumption, or RRC connection reestablishment. For example, a higher layer of an RRC layer of the remote UE terminates an RRC connection establishment procedure, and the remote UE sends the first indication information to the relay UE. It may be understood that the first timer does not expire before the procedure of entering the RRC connected state by the remote UE is terminated.

If the procedure of entering the RRC connected state is terminated, the remote UE reestablishes or releases the PCS RLC corresponding to the Uu RB, and/or the remote UE releases the sidelink logical channel corresponding to the Uu RB of the remote UE.

It may be understood that for descriptions of the first indication information, refer to the indication information shown in FIG. 2 or the first indication information shown in FIG. 3. Details are not described herein again.

404: The relay UE processes the first indication information.

It may be understood that for specific descriptions of step 404, refer to the foregoing step 204 and/or step 304. Details are not described herein again.

In a possible implementation, the method shown in FIG. 4 further includes the following step.

405: The relay UE sends second indication information to the remote UE, where the second indication information indicates that an RRC connection between the relay UE and the base station is available. Correspondingly, the remote UE receives the second indication information.

For example, if the first indication information indicates the relay UE not to forward the data corresponding to the remote UE, or the first indication information indicates to clear the buffer corresponding to the remote UE, after the relay UE performs processing based on the first indication information, if the RRC connection between the relay UE and the base station is available, the relay UE may send the second indication information to the remote UE, where the second indication information indicates that the RRC connection between the relay UE and the base station is available. For beneficial effects of the method shown in FIG. 4, refer to FIG. 2 or FIG. 3. Details are not described herein again.

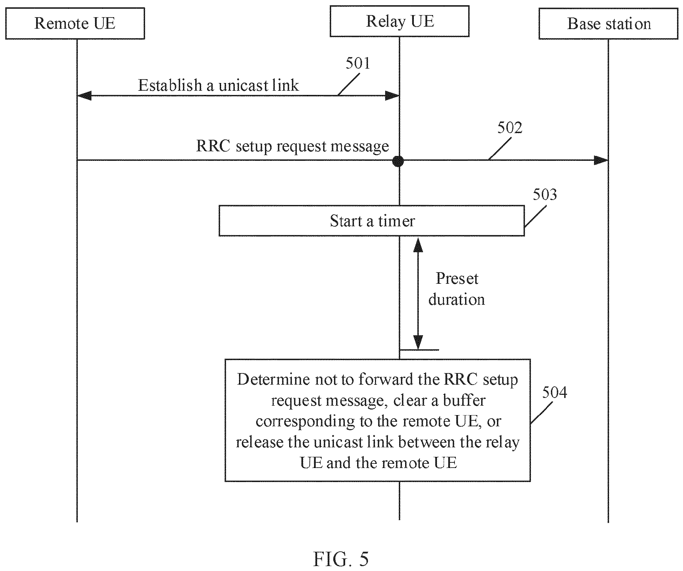

FIG. 5 is a schematic flowchart of still another data processing method according to an embodiment of this application. As shown in FIG. 5, the method includes the following steps.

501: A remote UE establishes a unicast link with a relay UE.

502: The remote UE sends an RRC setup request message to a base station via the relay UE. Correspondingly, the relay UE receives the RRC setup request message.

If the remote UE initializes an RRC connection establishment procedure, the remote UE sends the RRC setup request message to the relay UE.

Optionally, step 502 may also be represented as: The remote UE initializes an RRC connection resumption procedure, and sends an RRC resumption request message to the base station via the relay UE; or the remote UE initializes an RRC connection reestablishment procedure, and sends an RRC reestablishment request message to the base station via the relay UE.

It may be understood that for specific descriptions of the RRC setup request message, the RRC resumption request message, or the RRC reestablishment request message, refer to the methods shown in FIG. 2 to FIG. 4. Details are not described herein again.

503: If the relay UE receives the RRC setup request message from the remote UE, the relay UE starts a timer.

It may be understood that if the relay UE receives the RRC setup request message from the remote UE may also be referred to as once the relay UE receives the RRC setup request message from the remote UE.

Optionally, if the relay UE receives the RRC resumption request message from the remote UE (which may also be referred to as once the relay UE receives the RRC resumption request message from the remote UE), the relay UE starts the timer.

Optionally, when the relay UE receives the RRC reestablishment request message from the remote UE (which may also be referred to as once the relay UE receives the RRC reestablishment request message from the remote UE), the relay UE starts the timer.

Optionally, the relay UE may not learn which type of message is received by the relay UE, except that the relay UE receives data carried on a Uu SRBO of the remote UE. It may be understood that the data carried on the Uu SRBO of the remote UE herein may be data carried on a PCS RLC, data carried on a sidelink logical channel, or the like corresponding to the Uu SRBO of the remote UE.

504: If the timer expires, the relay UE determines not to forward the RRC setup request message, clears a buffer corresponding to the remote UE, or releases the unicast link between the relay UE and the remote UE.

Duration (preset duration described below) of the timer may be configured by the relay UE, the remote UE, the base station, or the like. This is not limited in embodiments of this application. For example, the timer is stopped when any one or more of the following conditions are satisfied:
1. The relay UE receives data that is carried on a Uu RB (for example, the Uu SRBO or a Uu SRB1) of the remote UE and that is from the base station.
2. The relay UE forwards, to the remote UE, data that is carried on a Uu RB (for example, the Uu SRBO or a Uu SRB1) of the remote UE and that is from the base station.
3. The relay UE forwards the RRC setup request message to the base station.
4. The relay UE forwards the RRC resumption request message to the base station.
5. The relay UE forwards the RRC reestablishment request message to the base station.
6. The relay UE forwards data carried on a Uu RB of the remote UE to the base station.
7. The remote UE completes establishing an RRC connection with the base station.
8. The remote UE completes resuming an RRC connection to the base station.
9. The remote UE completes reestablishing an RRC connection with the base station.
10. The remote UE enters an RRC connected state.

It may be understood that the data carried on the Uu SRBO includes any one of the following: an RRC setup message or an RRC reject message. Data on the Uu SRB1 includes any one of the following: an RRC resumption message, an RRC reestablishment message, or an RRC release message.

It may be understood that when the timer runs, the timer is stopped if any one or more of the foregoing conditions are satisfied. It may be understood that if the remote UE enters the RRC connected state, the remote UE may send the indication information to the relay UE, to indicate that the remote UE has entered the RRC connected state, and the like. How the relay UE learns that the RRC connection establishment procedure of the remote UE ends, the RRC connection resumption procedure ends, or the RRC connection reestablishment procedure ends, or the like is not limited in embodiments of this application.

If the timer expires, it indicates that the relay UE does not receive the data that is carried on the Uu RB of the remote UE and that is from the base station, or does not forward, to the remote UE, the data that is carried on the Uu RB of the remote UE and that is from the base station. Therefore, the remote UE does not receive the data that is carried on the Uu RB and that is from the base station. In this case, the remote UE cannot receive a response message for entering the RRC connected state from the base station within specific duration, indicating that the remote UE fails to enter the RRC connected state.

It may be understood that for descriptions of the RRC connection, RRC connection establishment, RRC connection reestablishment, RRC connection resumption, and the like, refer to the method shown in FIG. 2 or FIG. 3.

For example, the foregoing step 503 and step 504 may also be understood as:

The relay UE determines whether the relay UE successfully forwards the RRC setup request message to the base station within the preset duration in which the RRC setup request message (or the data carried on the Uu RB of the remote UE) from the remote UE is received. If the relay UE does not successfully forward the RRC setup request message to the base station within the preset duration, the relay UE determines not to forward the RRC setup request message anymore, clears the buffer corresponding to the remote UE, or releases the unicast link between the relay UE and the remote UE.

Alternatively, the relay UE determines whether the relay UE successfully establishes an RRC connection with the base station within the preset duration in which the RRC setup request message (or the data carried on the Uu RB of the remote UE) from the remote UE is received. If the relay UE does not successfully establish the RRC connection with the base station within the preset duration, the relay UE determines not to forward the RRC setup request message anymore. Optionally, the relay UE may further not continue attempting to establish the RRC connection with the base station.

In other words, if the relay UE does not successfully establish the RRC connection with the base station, it indicates that the relay UE cannot successfully forward the RRC setup request message from the remote UE to the base station, and the relay UE may not continue attempting to forward the RRC setup request message.

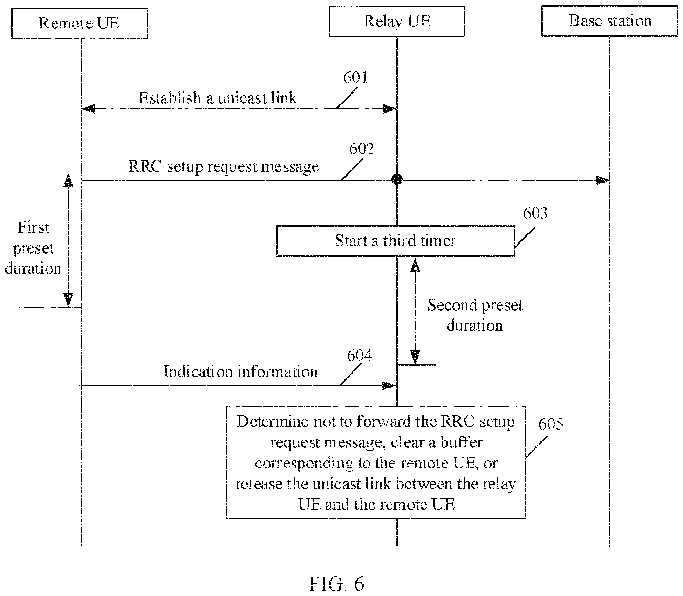

Optionally, the first timer in the remote UE shown in FIG. 2 to FIG. 4 may also be combined with the timer in the relay UE shown in FIG. 5. FIG. 6 is a schematic flowchart of still another data processing method according to an embodiment of this application. For example, the first timer shown in FIG. 2 to FIG. 4 may be a first timer in the method shown in FIG. 6, and the timer shown in FIG. 5 may be a third timer in the method shown in FIG. 6. As shown in FIG. 6, the method includes the following steps.

601: A remote UE establishes a unicast link with a relay UE.

602: The remote UE sends an RRC setup request message to a base station via the relay UE. Correspondingly, the relay UE receives the RRC setup request message.

603: If the relay UE receives the RRC setup request message from the remote UE, the relay UE starts a third timer.

For example, duration of the third timer may be determined based on duration of the first timer. For example, the duration of the third timer may be less than the duration of the first timer. For example, the duration of the third timer may be determined based on the duration of the first timer and an offset. The offset may be configured based on an SIB, predefined, or the like. This is not limited in embodiments of this application. For example, the duration of the third timer may be a difference between the duration of the first timer and the offset. For another example, a difference obtained by subtracting the offset from the first timer is the third timer. For another example, the duration of the third timer may be equal to the duration of the first timer.

604: If the first timer expires, the remote UE sends indication information to the relay UE, where the indication information indicates the relay UE not to forward data corresponding to the remote UE, indicates the relay UE to clear a buffer corresponding to the remote UE, or indicates to release the unicast link between the remote UE and the relay UE.

605: If the third timer expires, or if the relay UE receives the indication information from the remote UE, the relay UE determines not to forward the RRC setup request message, clears the buffer corresponding to the remote UE, or releases the unicast link between the remote UE and the relay UE.

In other words, if the third timer in the relay UE expires, or if the relay UE receives the indication information, the relay UE may perform the foregoing step 605. Alternatively, if the third timer expires, and if the relay UE receives the indication information, the relay UE may perform the foregoing step 605. It may be understood that for specific descriptions of FIG. 6, refer to FIG. 5. Details are not described herein again.

In embodiments of this application, if the remote UE does not successfully enter an RRC connected state, it can be avoided that the relay UE still needs to continuously attempt to unnecessarily forward the data between the remote UE and the base station or continuously attempts to enter an RRC connected state to provide a relay service for the remote UE, or the relay UE can leave an RRC connected state as soon as possible. This can reduce signaling overheads, and also reduce power consumption.

FIG. 7 is a schematic flowchart of still another data processing method according to an embodiment of this application.

In embodiments of this application, if a relay UE receives an RRC setup request message (or an RRC reestablishment request message, an RRC resumption request message, or the like) from a remote UE, even if an RRC connection between the relay UE and a base station is unavailable (which may also be referred to as that the RRC connection between the relay UE and the base station fails, or may also be referred to as that the relay UE fails to enter an RRC connected state), the relay UE may still continue attempting to forward the RRC setup request message (or the RRC reestablishment request message, the RRC resumption request message, or the like). In other words, the relay UE may continue starting RRC connection establishment to forward the RRC setup request message (or the RRC reestablishment request message, or the RRC resumption request message). To enable the relay UE to continue forwarding the RRC setup request message, after the RRC connection between the relay UE and the base station fails, the relay UE may continue buffering the RRC setup request message (that is, the relay UE may not clear a buffer corresponding to the remote UE).

Similarly, the case in which the RRC connection between the relay UE and the base station is unavailable may further include that RRC connection access of the relay UE is barred. If the relay UE receives the RRC setup request message (or the RRC reestablishment request message, or the RRC resumption request message) from the remote UE, access of the RRC connection of the relay UE is considered to be barred. In this case, after access barring is alleviated, the relay UE may continue attempting to forward the RRC setup request message, that is, the relay UE continues starting RRC connection establishment for the RRC setup request message. To enable the relay UE to continue forwarding the RRC setup request message, after access of the RRC connection between the relay UE and the base station is barred, the relay UE still needs to continue buffering the RRC setup request message from the remote UE, that is, the relay UE does not clear the buffered RRC setup request message.

In other words, in embodiments of this application, the case in which the RRC connection between the relay UE and the base station is unavailable includes: RRC connection establishment of the relay UE fails, RRC connection reestablishment of the relay UE fails, RRC connection resumption of the relay UE fails, or RRC connection access of the relay UE is barred, or the like. It may be understood that, that the RRC connection between the relay UE and the base station is unavailable may also be understood as that the RRC connection between the relay UE and the base station fails.

As shown in FIG. 7, the method includes the following steps.

701: The remote UE establishes a unicast link with the relay UE.

702: The remote UE sends the RRC setup request message to the base station via the relay UE. Correspondingly, the relay UE receives the RRC setup request message.

It may be understood that for descriptions of step 701 and step 702, refer to step 501 and step 502 shown in FIG. 5, or the RRC setup request message, the RRC resumption request message, the RRC reestablishment request message, or the like shown in FIG. 2 to FIG. 4.

In embodiments of this application, when receiving the RRC setup request message, the relay UE may be in an RRC idle state or an RRC inactive state. Therefore, after the relay UE receives the RRC setup request message, the following cases may occur on the relay UE:
Case 1: RRC connection establishment fails, RRC reestablishment fails, RRC resumption fails, or access is barred.

It may be understood that, that RRC connection establishment fails includes: A timer T300 expires, or an RRC reject message is received from the base station, or the like. That RRC reestablishment fails includes: A timer T301 expires (for example, no response message is received from the base station within a specific period of time), or a timer T311 expires (for example, no appropriate cell is selected within a specific period of time). That RRC resumption fails includes: A timer T319 expires (no response message is received from the base station within a specific period of time), an RRC release message is received from the base station, or an RRC reject message is received from the base station, or the like. That access is barred includes: A timer T390 is running or a timer T302 is running and an access category is neither "2" nor "0".

Case 2: The relay UE starts an RRC connection establishment procedure between the relay UE and the base station to forward the RRC setup request message, and RRC connection establishment fails; the relay UE starts an RRC connection establishment procedure between the relay UE and the base station to forward the RRC setup request message, and RRC connection access is barred; or the relay UE starts an RRC connection resumption procedure between the relay UE and the base station to forward the RRC setup request message, and RRC connection resumption fails.

In other words, in the foregoing case 1, a reason why the relay UE establishes an RRC connection (or reestablishes an RRC connection, or resumes an RRC connection) is not limited in embodiments of this application. In the case 2, a reason why the relay UE establishes the RRC connection is to forward the RRC setup request message from the remote UE to the base station.

For example, the reason (which may also be referred to as a cause value) why the relay UE establishes the RRC connection may be included in the RRC setup request message sent by the relay UE to the base station, or determined based on an access category and/or an access identity provided when a higher layer of an RRC layer of the relay UE requests to establish the RRC connection. It may be understood that a message carrying the reason why the relay UE establishes the RRC connection is not limited in embodiments of this application.

It may be understood that, that the relay UE starts an RRC connection establishment procedure between the relay UE and the base station to forward the RRC setup request message may also be understood as: The relay UE starts the RRC connection establishment procedure between the relay UE and the base station to provide a relay service for the remote UE.

Case 3: N^{th} RRC connection establishment fails, N^{th} RRC connection access is barred, N^{th} RRC connection reestablishment fails, or N^{th} RRC connection resumption fails. N is an integer greater than or equal to 1.

Case 4: The relay UE starts an RRC connection establishment procedure between the relay UE and the base station to forward the RRC setup request message, and M^{th} RRC connection establishment fails; the relay UE starts an RRC connection establishment procedure between the relay UE and the base station to forward the RRC setup request message, and M^{th} RRC connection establishment access is barred; the relay UE starts an RRC connection reestablishment procedure between the relay UE and the base station to forward the RRC setup request message, and M^{th} RRC connection establishment fails; or the relay UE starts an RRC connection resumption procedure between the relay UE and the base station to forward the RRC setup request message, and M^{th} RRC connection establishment fails. M is an integer greater than or equal to 1.

It may be understood that for descriptions of the case 3 and the case 4, refer to the foregoing case 1 and the foregoing case 2. Details are not described herein again.

703: The relay UE sends third indication information to the remote UE, where the third indication information indicates that the RRC connection between the relay UE and the base station is unavailable. Correspondingly, the remote UE receives the third indication information.

The third indication information may also be understood as indicating that the RRC connection between the relay UE and the base station fails.

Optionally, the third indication information may indicate a reason why the RRC connection between the relay UE and the base station fails. Therefore, the reason is indicated to the remote UE, so that the remote UE can learn that the RRC connection between the relay UE and the base station fails. For example, the reason why the RRC connection between the relay UE and the base station fails may include any one or more of the following: RRC connection establishment fails, RRC reestablishment fails, RRC resumption fails, access is barred, a timer T300 expires, an RRC reject message is received from the base station, a timer T319 expires, a timer T301 expires, a timer T311 expires, an RRC release message is received from the base station, or a timer T390 is running or a timer T302 is running and an access category is neither "2" nor "0". For specific descriptions of each timer, refer to the foregoing description. Details are not described herein again.

Optionally, the third indication information indicates duration in which the RRC connection between the relay UE and the base station is unavailable. Therefore, the duration is indicated to the remote UE, so that the remote UE can learn that the RRC connection between the relay UE and the base station is unavailable, and can also learn the duration in which the RRC connection of the relay UE is unavailable. For example, when a value of the duration is 0, it indicates that the RRC connection between the relay UE and the base station is available. When a value of the duration is greater than 0, it indicates that the RRC connection between the relay UE and the base station is unavailable. In an example, if the relay UE receives the RRC reject message from the base station, the relay UE sends the third indication information to the remote UE, and the relay UE may set, based on wait time in the RRC reject message received by the relay UE, a time length indicated by the third indication information. The RRC reject message includes the wait time (wait time). In another example, after receiving the RRC reject message from the base station, the relay UE sends the third indication information to the remote UE, and the relay UE may determine, based on running duration of the timer T302 or remaining duration of the timer T302, the duration indicated by the third indication information. In another example, when the relay UE needs to send the third indication information, if the timer T390 is running, the relay UE may determine, based on running duration or remaining duration of the timer T390, the duration indicated by the third indication information. In another example, the duration indicated by the third indication information may alternatively be a larger value of the remaining duration of the timer T390 and the remaining duration of the timer T302. Optionally, after the relay UE sends the third indication information to the remote UE, when the relay UE initiates an RRC connection establishment procedure (which may have a new access category or access identity or the like) again and the relay UE receives an RRC reject message from the base station again, if the RRC reject message includes another wait time (wait time), the relay UE may send third indication information to the remote UE again, to indicate the another wait time. For another example, after the relay UE sends the third indication information to the remote UE, when the relay UE initiates an RRC connection establishment procedure (which may have a new access category or access identity) again and the relay UE successfully enters a connected state, it indicates that the duration in which the RRC connection of the relay UE is unavailable changes to 0. In this case, the relay UE may send the third indication information to the remote UE again, to indicate updated duration (for example, 0).

Optionally, the relay UE may indicate, to the remote UE by using other indication information, the duration in which the RRC connection is unavailable. In other words, different indication information may separately indicate that the RRC connection is unavailable and indicate the duration in which the RRC connection is unavailable. Optionally, different indication information may separately indicate that the RRC connection is unavailable, indicate the reason why the RRC connection is unavailable, and the like. This is not limited in embodiments of this application.

In a possible implementation, after the remote UE receives the third indication information, the remote UE may continue waiting for the relay UE to continue attempting to establish the RRC connection with the base station. In other words, regardless of whether the third indication information indicates the duration, as long as the third indication information indicates that the RRC connection between the relay UE and the base station is unavailable, the remote UE may continue waiting. Correspondingly, after sending the third indication information to the remote UE, the relay UE may continue attempting to establish the RRC connection with the base station, and forward the RRC setup request message. After the RRC connection between the relay UE and the base station succeeds, the relay UE may forward the RRC setup request message. Optionally, after the RRC connection between the relay UE and the base station succeeds, the relay UE may send second indication information to the remote UE, where the second indication information indicates that the RRC connection between the relay UE and the base station is available.

In another possible implementation, the remote UE may wait, based on the duration in the third indication information, for the relay UE to forward the RRC setup request message. In other words, when access barring occurs on the relay UE, the relay UE may send the third indication information to the remote UE, where the third indication information indicates the duration in which the RRC connection between the relay UE and the base station is unavailable. After access barring is alleviated, the relay UE may continue attempting to establish the RRC connection with the base station. For example, if the duration indicated in the third indication information is large, the remote UE may send the second indication information to the relay UE (as described in step 706 below). However, when the duration indicated by the third indication information is small, the remote UE may wait for the relay UE to continue attempting to establish the RRC connection and forward the RRC setup request message. In other words, the remote UE may determine, based on the duration indicated by the third indication information, whether to send the second indication information. It may be understood that the remote UE may directly send the second indication information or the like based on the third indication information. This is not limited in embodiments of this application.

The remote UE determines access barring alleviation time of the RRC connection of the relay UE based on the duration that is indicated by the third indication information and for which the RRC connection between the relay UE and the base station is unavailable. Optionally, after access barring of the relay UE is alleviated, the remote UE starts an RRC connection establishment procedure with the base station via the relay UE. For example, the remote UE may send an RRC setup request message to the base station again via the relay UE. It may be understood that after the remote UE receives the third indication information, within the time indicated by the third indication information, that is, before barring of the relay UE is alleviated, the remote UE does not initiate, via the relay UE, a procedure of entering an RRC connected state. It may be understood that the descriptions of the RRC setup request message are also applicable to the descriptions of the RRC resumption request message or the RRC reestablishment request message.

In still another possible implementation, the relay UE may not continue attempting to forward the RRC setup request message from the remote UE to the base station within a period of time after sending the third indication information. That is, the relay UE does not continue starting the RRC connection establishment procedure to forward the RRC setup request message of the remote UE within the period of time. If the relay UE does not receive, within the period of time, the first indication information sent by the remote UE (as described in step 704 below), the relay UE may continue attempting to forward the RRC setup request message. That is, the relay UE may continue starting RRC connection establishment to forward the RRC setup request message.

In a possible implementation, the method shown in FIG. 7 further includes the following step.

704: The remote UE sends the first indication information to the relay UE, where the first indication information indicates the relay UE not to forward data corresponding to the remote UE, the first indication information is used to release the unicast link between the remote UE and the relay UE, or the first indication information indicates to clear the buffer corresponding to the remote UE.

705: The relay UE processes the first indication information.

For example, the relay UE may perform, based on the first indication information, any one or more of the following: not forwarding the data corresponding to the remote UE, releasing the unicast link between the remote UE and the relay UE, or clearing the buffer corresponding to the remote UE.

It may be understood that for specific descriptions of step 705 and step 706, refer to the foregoing description. Details are not described herein again.

In a possible implementation, when the first indication information indicates to release the unicast link between the remote UE and the relay UE, the remote UE may further interact with another relay UE, or after a period of time, the remote UE attempts to establish a PCS unicast link with the foregoing relay UE again.

In a possible implementation, if the first indication information indicates the relay UE not to forward the data corresponding to the remote UE, or the first indication information indicates to clear the buffer corresponding to the remote UE, the method shown in FIG. 7 may further include the following step.

706: The relay UE sends the second indication information to the remote UE, where the second indication information indicates that the RRC connection between the relay UE and the base station is available. Correspondingly, the remote UE receives the second indication information.

The RRC connection between the relay UE and the base station may include one or more of the following: access barring of the relay UE is alleviated, or the relay UE enters the RRC connected state.

For example, if the relay UE indicates, by using the third indication information, the duration in which the RRC connection between the relay UE and the base station is unavailable, after access barring of the RRC connection between the relay UE and the base station is alleviated, the relay UE may send the second indication information to the remote UE. Optionally, if the relay UE passes the duration indicated by the third indication information, and access barring of the relay UE is alleviated in advance, the relay UE may send the second indication information to the remote UE.

Optionally, when the first indication information indicates not to forward the data corresponding to the remote UE, because the data corresponding to the remote UE is still buffered in the relay UE, the remote UE does not need to send the RRC setup request message to the relay UE again. The remote UE may wait for the relay UE to continue attempting to establish the RRC connection with the base station, and forward the RRC setup request message to the base station.

Optionally, when the first indication information indicates to clear the buffer corresponding to the remote UE, because the relay UE has cleared the buffer corresponding to the remote UE, the remote UE needs to send the RRC setup request message to the relay UE again to establish the RRC connection with the base station via the relay UE.

It may be understood that after receiving the second indication information, the remote UE may start RRC connection establishment via the relay UE, or send the RRC setup request message to the base station via the relay UE, or the like. It may be understood that after receiving the third indication information, before receiving the second indication information, that is, before barring of the relay UE is alleviated, the remote UE does not initiate, via the relay UE, the procedure of entering the RRC connected state.

In embodiments of this application, the remote UE can obtain RRC connection information of the relay UE in a timely manner and therefore can flexibly determine whether to continue interacting with the base station via the relay UE, or the remote UE can further re-interact with the base station in a timely manner (for example, via another relay UE), so that a delay in entering the RRC connected state is reduced. The relay UE may continue attempting to enter the RRC connected state, to forward the data between the remote UE and the base station in a timely manner, so that a delay in entering an RRC connected state by the remote UE is reduced.

FIG. 8 is a schematic flowchart of still another data processing method according to an embodiment of this application.

In embodiments of this application, if a relay UE receives an RRC setup request message (or an RRC reestablishment request message, an RRC resumption request message) from a remote UE, if an RRC connection between the relay UE and a base station is unavailable, the relay UE does not continue attempting to forward the RRC setup request message. In other words, if an RRC connection establishment failure occurs on the relay UE, the relay UE does not continue attempting to forward data carried on a Uu SRB of the remote UE. That is, the relay UE does not continue starting an RRC connection establishment procedure to forward the data carried on the Uu SRB of the remote UE. In addition, the relay UE clears the buffered data carried on the Uu SRB of the remote UE.

As shown in FIG. 8, the method includes the following steps.

801: The remote UE establishes a unicast link with the relay UE.

802: The remote UE sends the RRC setup request message to the base station via the relay UE. Correspondingly, the relay UE receives the RRC setup request message.

It may be understood that for descriptions of step 801 and step 802, refer to the foregoing description. Details are not described herein again.

803: If the RRC connection between the relay UE and the base station is unavailable, the relay UE clears a buffer corresponding to the remote UE.

After the relay UE receives the RRC setup request message, four cases that may occur on the relay UE may be shown in FIG. 7 (case 1 to case 4 shown in FIG. 7). Details are not described herein again.

In a possible implementation, after the relay UE receives the RRC setup request message from the remote UE, if an RRC connection establishment failure, RRC connection access barring, an RRC connection reestablishment failure, or an RRC connection resumption failure occurs, the relay UE may clear the buffer corresponding to the remote UE. For example, the relay UE may directly clear the buffer of the foregoing RRC setup request message. For another example, the relay UE does not forward the data corresponding to the remote UE, the relay UE discards the data corresponding to the remote UE, the relay UE reestablishes or releases a PCS RLC corresponding to a Uu RB of the remote UE, or the relay UE releases a sidelink logical channel corresponding to a Uu RB of the remote UE.

In another possible implementation, after the relay UE receives the RRC setup request message, if an N^{th} RRC connection establishment failure or the like occurs, the relay UE may also directly clear the buffer corresponding to the remote UE.

In still another possible implementation, after the relay UE receives the RRC setup request message, if the relay UE starts the RRC connection establishment procedure to forward the RRC setup request message and an M^{th} RRC connection establishment failure occurs, the relay UE clears the buffer corresponding to the remote UE.

In other words, after the RRC connection failure (including the first RRC failure, the N^{th} RRC failure, or the M^{th} failure for forwarding the RRC setup request message) between the relay UE and the base station, the relay UE does not continue attempting to forward the RRC setup request message from the remote UE to the base station.

In a possible implementation, if the RRC connection between the relay UE and the base station is unavailable, the relay UE may alternatively send a unicast link release request message to the remote UE. In other words, when the RRC connection of the relay UE fails, the relay UE may request to release a unicast link between the relay UE and the remote UE. For descriptions of the unicast link release request message and a method for releasing the unicast link by the relay UE and the remote UE, refer to the foregoing description. Details are not described herein again. Alternatively, in another possible implementation, the method shown in FIG. 8 may include step 804.

It may be understood that, in embodiments of this application, the case in which the RRC connection between the relay UE and the base station is unavailable may include: Establishment of the RRC connection between the relay UE and the base station fails, resumption of the RRC connection between the relay UE and the base station fails, or reestablishment of the RRC connection between the relay UE and the base station fails, or the like. For a method related to an RRC connection resumption failure between the relay UE and the base station and a method related to an RRC connection reestablishment failure between the relay UE and the base station, refer to the foregoing description. Details are not described herein again.

804: The relay UE sends third indication information to the remote UE, where the third indication information indicates that the RRC connection between the relay UE and the base station is unavailable. Correspondingly, the remote UE receives the third indication information.

The third indication information may further indicate the relay UE not to continue starting the RRC connection establishment procedure to attempt to forward data carried on a Uu SRBO of the remote UE.

It may be understood that for other descriptions of the third indication information, refer to the method shown in FIG. 7. Details are not described herein again.

In a possible implementation, after receiving the third indication information, the remote UE may send first indication information to the relay UE, where the first indication information releases the unicast link between the remote UE and the relay UE.

In another possible implementation, the remote UE reselects a relay UE. In other words, the remote UE may establish an RRC connection with the base station via another relay UE.

In still another possible implementation, the remote UE determines access barring alleviation time of the RRC connection of the relay UE based on duration that is indicated by the third indication information and for which the RRC connection between the relay UE and the base station is unavailable. Optionally, after access barring of the relay UE is alleviated, the remote UE starts an RRC connection establishment procedure with the base station via the relay UE. For example, the remote UE may send the RRC setup request message to the relay UE again. It may be understood that after the remote UE receives the third indication information, within the time indicated by the third indication information, that is, before barring of the relay UE is alleviated, the remote UE does not initiate, via the relay UE, a procedure of entering an RRC connected state. In this case, the method shown in FIG. 8 may further include step 805.

In still another possible implementation, the remote UE may continue waiting for successful establishment of the RRC connection between the relay UE and the base station. In this case, the method shown in FIG. 8 may further include step 805.

In still another possible implementation, after receiving the third indication information, the remote UE may further perform one or more of the following: reestablishing or releasing all established PCS RLCs corresponding to Uu RBs, determining that the RRC connection fails, determining that the RRC connection establishment procedure ends, determining that an RRC connection resumption procedure ends, determining that an RRC connection reestablishment procedure ends, or the like.

805: The relay UE sends second indication information to the remote UE, where the second indication information indicates that the RRC connection between the relay UE and the base station is available. Correspondingly, the remote UE receives the second indication information.

For example, after receiving the second indication information, the remote UE may start RRC connection establishment via the relay UE, or send the RRC setup request message to the base station via the relay UE, or the like. It may be understood that after receiving the third indication information, before receiving the second indication information, that is, before barring of the relay UE is alleviated, the remote UE does not initiate, via the relay UE, the procedure of entering the RRC connected state.

The foregoing uses the RRC connection establishment procedure as an example for description. The method provided in embodiments of this application is also applicable to the RRC connection resumption procedure, the RRC connection reestablishment procedure, and the like. For example, the foregoing step 802 may further be: The remote UE sends an RRC resumption request message to the base station via the relay UE, or the remote UE sends an RRC reestablishment request message to the base station via the relay UE. In embodiments of this application, if the RRC connection of the relay UE is unavailable, the relay UE may not continue forwarding data carried on the Uu RB of the remote UE, and no longer start to enter an RRC connected state. Therefore, signaling overheads can be reduced, and power consumption can also be reduced.

FIG. 9 is a schematic flowchart of still another data processing method according to an embodiment of this application. As shown in FIG. 9, the method includes the following steps.

901: A remote UE establishes a unicast link with a relay UE.

902: The relay UE sends indication information to the remote UE, where the indication information indicates duration in which an RRC connection between the relay UE and a base station is unavailable. Correspondingly, the remote UE receives the indication information.

903: After the duration after reception of the indication information, the remote UE sends an RRC setup request message to the base station via the relay UE. Correspondingly, the relay UE receives the RRC setup request message.

The remote UE determines access barring alleviation time of the RRC connection of the relay UE based on the duration that is indicated by the indication information and for which the RRC connection between the relay UE and the base station is unavailable. Optionally, after access barring of the relay UE is alleviated, the remote UE starts an RRC connection establishment procedure with the base station via the relay UE. For example, the remote UE may send the RRC setup request message to the relay UE again. It may be understood that after the remote UE receives the indication information, within the time indicated by the indication information, that is, before barring of the relay UE is alleviated, the remote UE does not initiate, via the relay UE, a procedure of entering an RRC connected state.

For example, after receiving the RRC setup request message, the relay UE forwards the RRC setup request message to the base station. Correspondingly, the base station receives the RRC setup request message. Then, the base station sends the RRC setup request message to the remote UE via the relay UE. Correspondingly, the remote UE receives the RRC setup request message. The remote UE sends an RRC setup complete message to the base station via the relay UE. Correspondingly, the base station receives the RRC setup complete message. Therefore, it indicates that the RRC connection establishment procedure between the remote UE and the base station ends.

It may be understood that the foregoing uses the RRC connection establishment procedure as an example for description. The method provided in embodiments of this application is also applicable to an RRC connection resumption procedure, an RRC connection reestablishment procedure, and the like.

In embodiments of this application, if the relay UE is not in an RRC connected state, the remote UE may not initiate the RRC connection establishment procedure, the RRC resumption procedure, or the RRC reestablishment procedure to the base station via the relay UE. Therefore, signaling overheads can be reduced, and power consumption of the relay UE is also reduced.

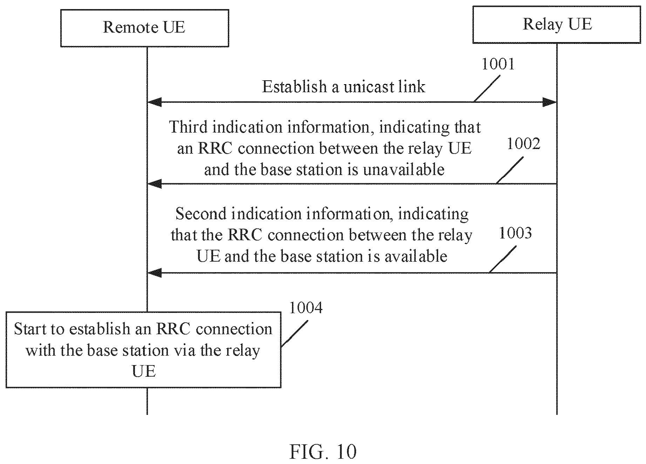

FIG. 10 is a schematic flowchart of still another data processing method according to an embodiment of this application. As shown in FIG. 10, the method includes the following steps.

1001: A remote UE establishes a unicast link with a relay UE.

1002: The relay UE sends third indication information to the remote UE, where the third indication information indicates that an RRC connection between the relay UE and a base station is unavailable. Correspondingly, the remote UE receives the third indication information.

It may be understood that for a method performed by the remote UE after the remote UE receives the third indication information, refer to FIG. 8. Details are not described herein again. For example, after receiving the third indication information, the remote UE may send first indication information to the relay UE, where the first indication information releases the unicast link between the remote UE and the relay UE. For another example, the remote UE reselects a relay UE. For another example, the remote UE determines access barring alleviation time of the RRC connection of the relay UE based on duration that is indicated by the third indication information and for which the RRC connection between the relay UE and the base station is unavailable. For another example, the remote UE may continue waiting for successful establishment of the RRC connection between the relay UE and the base station.

1003: The relay UE sends second indication information to the remote UE, where the second indication information indicates that the RRC connection between the relay UE and the base station is available. Correspondingly, the remote UE receives the second indication information.

It may be understood that for descriptions of the first indication information and the second indication information, refer to the foregoing description. Details are not described herein again.

1004: The remote UE starts to establish an RRC connection with the base station via the relay UE.

It may be understood that after receiving the second indication information, the remote UE may start RRC connection establishment via the relay UE, or send an RRC setup request message to the base station via the relay UE, or the like. It may be understood that after receiving the first indication information, before receiving the second indication information, that is, before barring of the relay UE is alleviated, the remote UE does not initiate, via the relay UE, a procedure of entering an RRC connected state.

It may be understood that the foregoing uses the RRC connection establishment procedure as an example for description. The method provided in embodiments of this application is also applicable to an RRC connection resumption procedure, an RRC connection reestablishment procedure, and the like. For example, the foregoing step 1004 may further be: The remote UE starts to resume the RRC connection to the base station via the relay UE, or the remote UE starts to reestablish the RRC connection with the base station via the relay UE.

In embodiments of this application, if the relay UE is not in an RRC connected state, the remote UE may not initiate the RRC connection establishment procedure, the RRC resumption procedure, or the RRC reestablishment procedure to the base station via the relay UE. Therefore, signaling overheads can be reduced, and power consumption of the relay UE is also reduced.

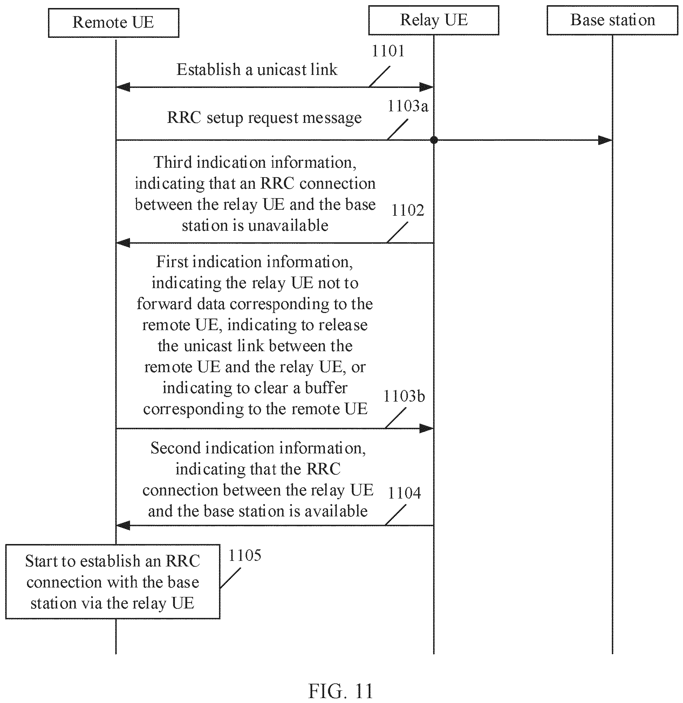

As shown in FIG. 11, still another data processing method provided in an embodiment of this application includes the following steps.

1101: A remote UE establishes a unicast link with a relay UE.

For descriptions of step 1101, refer to step 201.

1102: The relay UE sends third indication information to the remote UE, where the third indication information indicates that an RRC connection between the relay UE and a base station is unavailable. Correspondingly, the remote UE receives the third indication information.

For descriptions of step 1102, refer to step 703, step 804, or step 1002.

That the RRC connection is unavailable may further include an RRC handover failure. When the relay UE is in an RRC connected state, RRC handover may occur. That the relay UE performs RRC handover may also be understood as that the relay UE receives an RRC reconfiguration (RRCReconfiguration) message that is used for handover and that is sent by the base station. The base station may also be referred to as a source base station in a handover procedure. The base station sends the RRC reconfiguration message to the relay UE to trigger air interface handover, where the message includes information required for accessing a target cell, including target cell identity and the like. After receiving the RRC reconfiguration message, the relay UE starts a timer T304. The relay UE synchronizes with the target cell and sends an RRC reconfiguration complete RRCReconfigurationComplete message to a target base station to complete the RRC handover procedure. If the relay UE completes a random access procedure in the target cell, the timer T304 is stopped. If T304 expires, the relay UE triggers an RRC connection reestablishment procedure. It may be understood that if T304 expires, RRC handover fails. The target base station and the source base station (namely, the base station that sends the RRC reconfiguration message for handover to the relay UE) may be a same base station or different base stations. The target base station is a base station corresponding to the target cell.

In a possible implementation, after receiving the third indication information, the remote UE may send first indication information to the relay UE, where the first indication information releases the unicast link between the remote UE and the relay UE.

In another possible implementation, the remote UE reselects a relay UE. In other words, the remote UE may reselect one relay UE, to receive paging via the reselected relay UE or enter an RRC connected state via the reselected relay UE.

In a possible implementation, the method further includes the following steps.

Before step 1102, 1103a: The remote UE sends an RRC setup request message to the base station via the relay UE, and correspondingly the relay UE receives the RRC setup request message; the remote UE sends an RRC resumption request message to the base station via the relay UE, and correspondingly the relay UE receives the RRC resumption request message; or the remote UE sends an RRC reestablishment request message to the base station via the relay UE, and correspondingly the relay UE receives the RRC reestablishment request message. For step 1103a, refer to step 702 or step 802.

In a possible implementation, if the RRC connection between the relay UE and the base station is unavailable, the relay UE clears a buffer corresponding to the remote UE. Refer to step 803.

Optionally, after step 1102, 1103b: The remote UE sends the first indication information to the relay UE, where the first indication information indicates the relay UE not to forward data corresponding to the remote UE, the first indication information is used to release the unicast link between the remote UE and the relay UE, or the first indication information indicates to clear the buffer corresponding to the remote UE. Correspondingly, the relay UE processes the first indication information. Refer to step 704 and step 705.

In a possible implementation, the method may further include the following step.

1104: The relay UE sends second indication information to the remote UE, where the second indication information indicates that the RRC connection between the relay UE and the base station is available. Correspondingly, the remote UE receives the second indication information. Refer to step 706 or step 1003. That the RRC connection between the relay UE and the base station is available may further include that the relay UE completes RRC reestablishment after the RRC handover failure. Completion of RRC reestablishment may be that the relay UE sends an RRC reestablishment complete message to the base station, the relay UE receives an RRC reestablishment message sent by the base station, or a timer T301 is stopped.

Optionally, 1105: The remote UE starts to establish an RRC connection with the base station via the relay UE, the remote UE starts to resume an RRC connection to the base station via the relay UE, or the remote UE starts to reestablish an RRC connection with the base station via the relay UE. Refer to step 1004.

In embodiments of this application, the remote UE can obtain RRC connection information of the relay UE in a timely manner and therefore can flexibly determine whether to continue remaining a unicast connection with the relay UE and interacting with the base station via the relay UE, or the remote UE can further reselect the relay UE in a timely manner to re-interact with the base station, so that a delay in entering the RRC connected state is reduced. The relay UE may continue attempting to enter the RRC connected state, to forward the data between the remote UE and the base station in a timely manner, so that the delay in entering the RRC connected state by the remote UE is reduced.

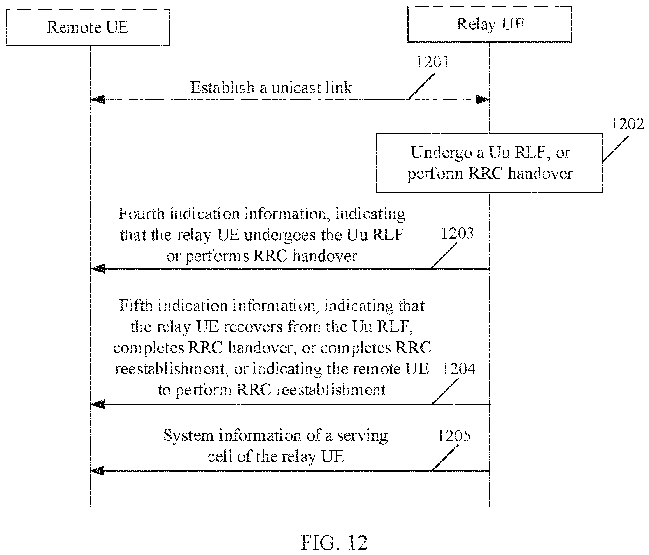

As shown in FIG. 12, still another data processing method provided in an embodiment of this application includes the following steps.

1201: A remote UE establishes a unicast link with a relay UE.

For descriptions of step 1201, refer to step 201.

1202: The relay UE undergoes a Uu RLF, or the relay UE performs RRC handover.

The Uu RLF of the relay UE is an RLF of a link between the relay UE and a base station. That the relay UE undergoes a Uu RLF may also be understood as that the relay UE detects the Uu RLF. After the relay UE undergoes a Uu RLF, the relay UE initiates RRC connection reestablishment.

That the relay UE performs RRC handover may also be understood as that the relay UE receives an RRC reconfiguration (RRCReconfiguration) message that is used for handover and that is sent by the base station. The base station may also be referred to as a source base station in a handover procedure. The base station sends the RRC reconfiguration message to the relay UE to trigger air interface handover, where the message includes information required for accessing a target cell, including target cell identity and the like. After receiving the RRC reconfiguration message, the relay UE starts a timer T304. The relay UE synchronizes with the target cell and sends an RRC reconfiguration complete RRCReconfigurationComplete message to a target base station to complete the RRC handover procedure. If the relay UE completes a random access procedure in the target cell, the timer T304 is stopped. If T304 expires, the relay UE triggers an RRC connection reestablishment procedure. It may be understood that if T304 expires, RRC handover fails. The target base station and the source base station (namely, the base station that sends the RRC reconfiguration message for handover to the relay UE) may be a same base station or different base stations. The target base station is a base station corresponding to the target cell.

1203: The relay UE sends fourth indication information to the remote UE, where the fourth indication information indicates that the relay UE undergoes the Uu RLF, or the fourth indication information indicates that the relay UE performs RRC handover.

The relay UE may send the fourth indication information to the remote UE after detecting the Uu RLF.

The relay UE may send the fourth indication information to the remote UE after receiving the RRC reconfiguration (RRCReconfiguration) message that is used for handover and that is sent by the base station.

It may be understood that due to the Uu RLF or RRC handover, the relay UE may not provide a relay service for the remote UE. Therefore, the fourth indication information may also indicate that the relay UE cannot provide the relay service.

After receiving the fourth indication information, the remote UE may trigger reselecting a relay UE. After receiving the fourth indication information, the remote UE may alternatively determine not to initiate, via the relay UE, a procedure of entering an RRC connected state. After the remote UE in the RRC connected state receives the fourth indication information via the relay UE, the remote UE may also initiate an RRC reestablishment procedure.

1204: The relay UE sends fifth indication information to the remote UE, where the fifth indication information indicates that the relay UE recovers from the Uu RLF, the relay UE completes RRC handover, or the relay UE completes RRC reestablishment; or the fifth indication information indicates the remote UE to perform RRC reestablishment.

That the relay UE recovers from the Uu RLF may also be understood as that the relay UE completes RRC reestablishment. Completion of RRC reestablishment may be that the relay UE sends an RRC reestablishment complete message to the base station, the relay UE receives an RRC reestablishment message sent by the base station, or a timer T301 is stopped.

Completion of RRC handover may be that the relay UE sends the RRC reconfiguration complete message to the target base station, the relay UE completes the random access procedure in the target cell, or a timer T304 is stopped.

It may be understood that, that the relay UE completes RRC reestablishment includes at least one of the following: The relay UE completes RRC reestablishment after undergoing the Uu RLF, or the relay UE completes RRC reestablishment after performing RRC handover.

After receiving the fifth indication information, the remote UE may determine to continue remaining a unicast connection with the relay UE. After receiving the fifth indication information, the remote UE may alternatively determine to initiate, via the relay UE, the procedure of entering the RRC connected state. After receiving the fifth indication information, the remote UE may alternatively determine to initiate the RRC reestablishment procedure via the relay UE.

1205: The relay UE sends system information of a serving cell of the relay UE to the remote UE.

The system information herein may be at least one of the following: essential system information (essential system information), a system information block 1 (System Information Block 1, SIB1), a master information block (master information block, MIB), partial information in the essential system information, partial information in the system information block 1, partial information in the master information block, or cell identity (for example, cell identity for unambiguously identifying a cell in a public land mobile network (public land mobile network, PLMN)/standalone non-public network (standalone non-public network, SNPN)).

The relay UE may send the system information of the serving cell of the relay UE to the remote UE after completing RRC handover or RRC reestablishment. The relay UE sends the system information of the serving cell to the remote UE after completing RRC handover or RRC reestablishment. In this case, the remote UE does not send an RRC setup request message, an RRC connection reestablishment request message, or an RRC connection resumption request message via the relay UE before the relay UE completes RRC handover or RRC reestablishment. Therefore, it can be avoided that sending of the RRC setup request message, the RRC connection reestablishment request message, or the RRC connection resumption request message to the relay UE by the remote UE is invalidated by an RRC handover failure or an RRC reestablishment failure of the relay UE, signaling overheads can be reduced, and signaling transmission waste can be avoided.

After triggering RRC reestablishment and then selecting the appropriate cell, the relay UE may further send the system information of the cell of the relay UE to the remote UE. It may be understood that after selecting the appropriate cell and obtaining the system information of the cell, the relay UE may further send the system information of the cell of the relay UE to the remote UE. In this way, the remote UE can obtain the system information of the cell as early as possible, to use the system information as early as possible.

After receiving the RRC reconfiguration message that is used for RRC handover and that is sent by the base station, the relay UE may further send, to the remote UE, system information of a target cell to which the relay UE is handed over. It may be understood that after obtaining the system information of the target cell, the relay UE may further send, to the remote UE, the system information of the target cell to which the relay UE is handed over. In this way, the remote UE can obtain the system information of the cell as early as possible, to use the system information as early as possible.

After the RRC reestablishment failure, the relay UE may further send the system information of the serving cell of the relay UE to the remote UE.

After receiving the system information of the serving cell of the relay UE, the remote UE may use the system information. The remote UE may send, based on the system information via the relay UE, the RRC setup request message or the RRC connection resumption request message to the base station corresponding to the serving cell of the relay UE. After receiving the system information of the serving cell of the relay UE, the remote UE may further determine, based on the cell identity of the serving cell of the relay UE, shortMAC-I included in the RRC reestablishment request message, so that the remote UE sends, via the relay UE, the RRC reestablishment request message to the base station corresponding to the serving cell of the relay UE.

It may be understood that steps 1203, 1204, and 1205 are optional steps. Optionally, steps 1204 and 1205 may be sending by using one message. In a possible implementation, if the same serving cell of the relay UE is used after the relay UE initiates reestablishment and before reestablishment, the relay UE sends only the indication information in step 1204. If the different serving cells of the relay UE are used after the relay UE initiates reestablishment and before reestablishment, the relay UE sends the indication information in step 1205, or sends both the indication information in step 1204 and the indication information in step 1205.

In embodiments of this application, the relay UE may notify the remote UE in a timely manner after completing RRC reestablishment or RRC handover, so that the remote UE can flexibly select whether to reselect the relay UE, or the remote UE can be triggered to also perform RRC reestablishment. The remote UE may continue accessing the network via the relay UE that completes RRC reestablishment, and does not need to select another relay UE, so that power consumption caused when the remote UE reselects the another relay UE is reduced. In addition, because the remote UE accesses the network via the relay UE, and the relay UE 1 is in an RRC connected state, a case in which RRC reestablishment fails due to poor cell signal quality when the remote UE initiates RRC reestablishment by using a Uu interface can be reduced. Service continuity of the remote UE is improved. The relay UE sends the system information of the serving cell of the relay UE to the remote UE after completing RRC reestablishment or RRC handover, so that the remote UE uses the system information to initiate an RRC connection establishment procedure, an RRC connection resumption procedure, or an RRC connection reestablishment procedure, and send the RRC reestablishment request message.

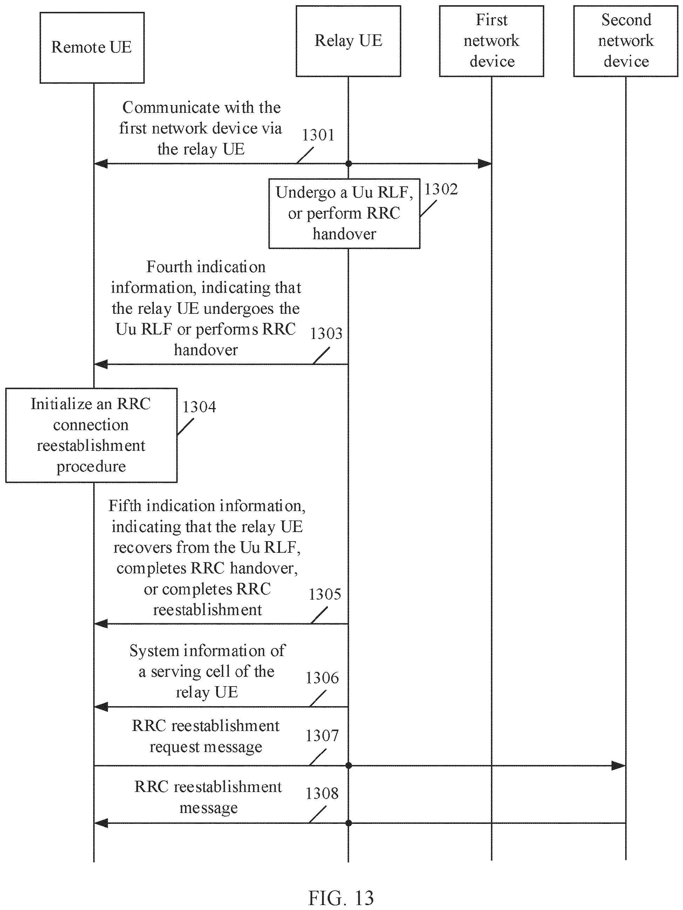

As shown in FIG. 13, still another data processing method provided in an embodiment of this application includes the following steps.

1301: A remote UE communicates with a first network device via a relay UE.

The remote UE may access a network via the relay UE. The relay UE provides a relay service for the remote UE. The remote UE may establish an RRC connection with the first network device via the relay UE. When the remote UE is in an RRC connected state, the remote UE and the first network device may transmit data via the relay UE. The first network device may be a base station.

For example, the remote UE may send first data to the relay UE, and the first data needs to be sent to the first network device. After receiving the first data from the remote UE, the relay UE sends the first data to the first network device. For another example, the first network device sends second data to the relay UE, and the second data needs to be sent to the remote UE. After receiving the second data from the first network device, the relay UE may send the second data to the remote UE. In this way, the remote UE and the first network device implement communication via the relay UE.

It may be understood that before the remote UE communicates with the first network device via the relay UE, the remote UE needs to establish a unicast link with the relay UE.

1302: The relay UE undergoes a Uu RLF, or the relay UE performs RRC handover.

For descriptions of step 1302, refer to step 1202. The base station in step 1202 may be the first network device, and the target base station in step 1202 may be a second network device. For example, the Uu RLF of the relay UE is an RLF of a link between the relay UE and the first network device. That the relay UE performs RRC handover may also be understood as that the relay UE receives an RRC reconfiguration (RRCReconfiguration) message that is used for handover and that is sent by the first network device. The first network device may also be referred to as a source base station in a handover procedure. The first network device sends the RRC reconfiguration message to the relay UE to trigger air interface handover, where the message includes information required for accessing a target cell, including target cell identity and the like. After receiving the RRC reconfiguration message, the relay UE starts a timer T304. The relay UE synchronizes with the target cell and sends an RRC reconfiguration complete RRCReconfigurationComplete message to the second network device to complete the RRC handover procedure. The second network device may be the target base station. The second network device is a network device corresponding to the target cell. The first network device and the second network device may be the same or different.

1303: The relay UE sends fourth indication information to the remote UE, where the fourth indication information indicates that the relay UE undergoes the Uu RLF, or the fourth indication information indicates that the relay UE performs RRC handover.

For descriptions of step 1303, refer to step 1203. The base station in step 1203 may be the first network device.

1304: The remote UE initializes an RRC connection reestablishment procedure.

For descriptions of step 1304, refer to step 202. The remote UE initializes the RRC connection reestablishment procedure, and may start a first timer.

Once the remote UE initializes the RRC connection reestablishment procedure, the remote UE can further suspend all Uu RBs except a Uu SRB0. The Uu RB is an RB between the remote UE and the first network device, and the Uu SRB0 is an SRB0 between the remote UE and the first network device.

1305: The relay UE sends fifth indication information to the remote UE, where the fifth indication information indicates that the relay UE recovers from the Uu RLF, the relay UE completes RRC handover, or the relay UE completes RRC reestablishment.

For descriptions of step 1305, refer to step 1204.

1306: The relay UE sends system information of a serving cell of the relay UE to the remote UE.

For descriptions of step 1306, refer to step 1205. The base station corresponding to the serving cell of the relay UE is the second network device.

The remote UE receives the system information of the serving cell of the relay UE, and stops the first timer. For the first timer, refer to the first timer started when the remote UE initializes the RRC connection reestablishment procedure in step 202. After receiving the system information of the serving cell of the relay UE, the remote UE may start a second timer. For the second timer, refer to the first timer started after the remote UE selects or reselects the relay UE in reestablishing the RRC connection via the relay UE and obtains the system information of the serving cell of the relay UE in step 202.

1307: The remote UE sends an RRC reestablishment request message to the second network device via the relay UE.

The second network device is the base station corresponding to the serving cell of the relay UE. The relay UE forwards the RRC reestablishment request message of the remote UE to the second network device. Correspondingly, the second network device receives the RRC reestablishment request message of the remote UE via the relay UE.

1308: The second network device sends an RRC reestablishment message to the remote UE via the relay UE.

Correspondingly, the remote UE receives the RRC reestablishment message from the second network device via the relay UE. The remote UE stops the second timer. The remote UE then sends an RRC reestablishment complete message to the second network device via the relay UE, and the RRC connection reestablishment procedure of the remote UE ends.

It may be understood that steps 1305 and 1306 are optional steps. Optionally, steps 1305 and 1306 may be sending by using one message. In a possible implementation, if the same serving cell of the relay UE is used after the relay UE initiates reestablishment and before reestablishment, the relay UE sends only the indication information in step 1305. If the different serving cells of the relay UE are used after the relay UE initiates reestablishment and before reestablishment, the relay UE sends the indication information in step 1306, or sends both the indication information in step 1305 and the indication information in step 1306.

In embodiments of this application, the relay UE may notify the remote UE in a timely manner after completing RRC reestablishment or RRC handover, so that the remote UE can flexibly select whether to reselect the relay UE, or the remote UE can be triggered to also perform RRC reestablishment. The remote UE may continue accessing the network via the relay UE that completes RRC reestablishment, and does not need to select another relay UE, so that power consumption caused when the remote UE reselects the another relay UE is reduced. In addition, because the remote UE accesses the network via the relay UE, and the relay UE 1 is in an RRC connected state, a case in which RRC reestablishment fails due to poor cell signal quality when the remote UE initiates RRC reestablishment by using a Uu interface can be reduced. Service continuity of the remote UE is improved. The relay UE sends the system information of the serving cell of the relay UE to the remote UE after completing RRC reestablishment or RRC handover, so that the remote UE uses the system information to send the RRC reestablishment request message.

With reference to the foregoing method, this application further provides the following embodiments.
1. A data processing method, applied to a remote terminal device, where the remote terminal device communicates with a network device via a relay terminal device, and the method includes:
   if a radio resource control RRC connection establishment procedure is initialized, starting a timer; and
   if the timer expires, sending indication information to the relay terminal device, where the indication information indicates the relay terminal device not to forward data corresponding to the remote terminal device, the indication information is used to release a unicast link between the remote terminal device and the relay terminal device, or the indication information indicates to clear a buffer corresponding to the remote terminal device.
2. The method according to Embodiment 1, where the timer is stopped if the following condition is satisfied:
   an RRC setup message from the network device is received; or
   an RRC reject message from the network device is received.
3. The method according to Embodiment 1 or 2, where before the sending indication information to the relay terminal device, the method further includes:
   sending an RRC setup request message to the network device via the relay terminal device.
4. The method according to any one of Embodiments 1 to 3, where the timer includes a timer T300.
5. The method according to any one of Embodiments 1 to 4, where the data corresponding to the remote terminal device is data carried on a signaling radio bearer SRB between the remote terminal device and the network device.
6. A data processing method, applied to a relay terminal device, where a remote terminal device communicates with a network device via the relay terminal device, and the method includes:
   receiving indication information from the remote terminal device, where the indication information indicates the relay terminal device not to forward data corresponding to the remote terminal device, the indication information is used to release a unicast link between the remote terminal device and the relay terminal device, or the indication information indicates to clear a buffer corresponding to the remote terminal device; and
   processing the indication information.
7. The method according to Embodiment 6, where the processing the indication information includes any one or more of the following:
   determining not to forward the data corresponding to the remote terminal device;
   releasing the unicast link between the remote terminal device and the relay terminal device; or
   clearing the buffer corresponding to the remote terminal device.
8. The method according to Embodiment 6 or 7, where before the receiving indication information from the remote terminal device, the method further includes:
   receiving data carried on a signaling radio bearer SRB from the remote terminal device.
9. The method according to any one of Embodiments 6 to 8, where the data corresponding to the remote terminal device is the data carried on the signaling radio bearer SRB between the remote terminal device and the network device.
10. A data processing method, applied to a relay terminal device, where a remote terminal device communicates with a network device via the relay terminal device, and the method includes:
   receiving data carried on a signaling radio bearer SRB of the remote terminal device;
   starting a timer; and
   if the timer expires, performing any one or more of the following:
      determining not to forward data corresponding to the remote terminal device;
      releasing a unicast link between the remote terminal device and the relay terminal device; or
      clearing a buffer corresponding to the remote terminal device.
11. The method according to Embodiment 10, where the timer is stopped if any one or more of the following conditions is satisfied:
   the data that is carried on the signaling radio bearer SRB of the remote terminal device and that is from the network device is received; or
   the data that is carried on the signaling radio bearer SRB of the remote terminal device and that is from the network device is forwarded to the remote terminal device.
12. A data processing method, applied to a remote terminal device, where the remote terminal device communicates with a network device via a relay terminal device, and the method includes:
   receiving third indication information from the relay terminal device, where the third indication information indicates that an RRC connection between the relay terminal device and the network device is unavailable; and
   sending first indication information to the relay terminal device, where the first indication information indicates the relay terminal device not to forward data corresponding to the remote terminal device, the first indication information indicates to release a unicast link between the remote terminal device and the relay terminal device, or the first indication information indicates to clear a buffer corresponding to the remote terminal device.
13. The method according to Embodiment 12, where the third indication information further indicates duration in which the RRC connection between the remote terminal device and the network device is unavailable.
14. The method according to Embodiment 13, further including:
   after the duration, sending data to the network device via the relay terminal device.
15. The method according to Embodiment 12, where before the receiving third indication information from the relay terminal device, the method further includes:
   sending data to the network device via the relay terminal device.
16. The method according to any one of Embodiments 12 to 15, where the data corresponding to the remote terminal device is data carried on a signaling radio bearer SRB between the remote terminal device and the network device.
17. The method according to any one of Embodiments 12 to 16, further including:
   receiving second indication information from the relay terminal device, where the second indication information indicates that the RRC connection between the relay terminal device and the network device is available.
18. The method according to any one of Embodiments 15 to 17, where the data is carried in any one of the following: an RRC setup request message, an RRC resumption request message, or an RRC reestablishment request message, and after the receiving third indication information from the relay terminal device, the method further includes:
   determining that the RRC connection between the remote terminal device and the network device fails.
19. A data processing method, applied to a relay terminal device, where a remote terminal device communicates with a network device via the relay terminal device, and the method includes:
   sending third indication information to the remote terminal device, where the third indication information indicates that a radio resource control RRC connection between the relay terminal device and the network device is unavailable; and
   receiving first indication information from the remote terminal device, where the first indication information indicates the relay terminal device not to forward data corresponding to the remote terminal device, the first indication information indicates to release a unicast link between the remote terminal device and the relay terminal device, or the first indication information indicates to clear a buffer corresponding to the remote terminal device.
20. The method according to Embodiment 19, where the third indication information further indicates duration in which the RRC connection between the remote terminal device and the network device is unavailable.
21. The method according to Embodiment 20, further including:
   after the duration, receiving data from the remote terminal device.
22. The method according to Embodiment 19, where before the sending third indication information to the remote terminal device, the method further includes:
   receiving data from the remote terminal device.
23. The method according to any one of Embodiments 19 to 22, further including:
   sending second indication information to the remote terminal device, where the second indication information indicates that the RRC connection between the relay terminal device and the network device is available.
24. The method according to any one of Embodiments 19 to 23, where the data corresponding to the remote terminal device is data carried on a signaling radio bearer SRB between the remote terminal device and the network device.
25. The method according to Embodiment 22, where after the receiving data from the remote terminal device, the method further includes:
   if it is determined that the RRC connection between the relay terminal device and the network device is unavailable, clearing the buffer corresponding to the remote terminal device.
26. The method according to Embodiment 19, where after the receiving first indication information from the remote terminal device, the method further includes:
   clearing, based on the first indication information, the buffer corresponding to the remote terminal device.
27. The method according to Embodiment 22, where the data is data carried on a signaling radio bearer SRB of the remote terminal device.
28. The method according to Embodiment 27, where after the relay terminal device receives an RRC setup request message, the method further includes:
   if the relay terminal device is in an RRC idle state, establishing the RRC connection with the network device; and
   the sending third indication information to the remote terminal device includes:
      if establishment of the RRC connection between the relay terminal device and the network device fails, sending the third indication information to the remote terminal device.
29. The method according to Embodiment 27, where after the relay terminal device receives an RRC setup request message, the method further includes:
   if the relay terminal device is not in an RRC connected state, reestablishing the RRC connection with the network device, or resuming the RRC connection to the network device; and
   the sending third indication information to the remote terminal device includes:
      if reestablishment or resumption of the RRC connection between the relay terminal device and the network device fails, sending the third indication information to the remote terminal device.
30. A data processing method, applied to a relay terminal device, where a remote terminal device communicates with a network device via the relay terminal device, and the method includes:
   if an RRC connection between the relay terminal device and the network device is unavailable, sending indication information to the remote terminal device, where the indication information indicates duration in which the RRC connection between the relay terminal device and the network device is unavailable; and
   after the duration after sending of the indication information, receiving data from the remote terminal device.
31. A data processing method, applied to a remote terminal device, where the remote terminal device communicates with a network device via a relay terminal device, and the method includes:
   receiving indication information from the relay terminal device, where the indication information indicates duration in which an RRC connection between the relay terminal device and the network device is unavailable; and
   after the duration after reception of the indication information, sending data to the network device via the relay terminal device.
32. A data processing method, applied to a relay terminal device, where a remote terminal device communicates with a network device via the relay terminal device, and the method includes:
   sending third indication information to the remote terminal device, where the third indication information indicates that an RRC connection between the relay terminal device and the network device is unavailable; and
   sending second indication information to the remote terminal device, where the second indication information indicates that the RRC connection between the relay terminal device and the network device is available.
33. A data processing method, applied to a remote terminal device, where the remote terminal device communicates with a network device via a relay terminal device, and the method includes:
   receiving third indication information from the relay terminal device, where the third indication information indicates that an RRC connection between the relay terminal device and the network device is unavailable;
   receiving second indication information from the relay terminal device, where the second indication information indicates that the RRC connection between the relay terminal device and the network device is available; and
   starting to establish an RRC connection with the network device via the relay terminal device.

A communication apparatus provided in an embodiment of this application is described below.

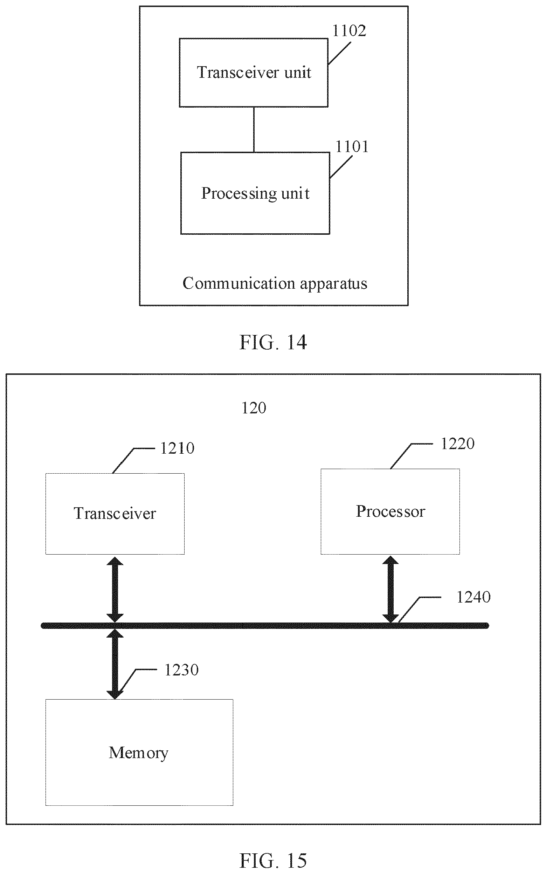

In this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into the modules is an example and is merely logical function division, and may be other division during actual implementation. The following describes in detail a communication apparatus in an embodiment of this application with reference to FIG. 14 to FIG. 16.

FIG. 14 is a schematic diagram of a structure of a communication apparatus according to an embodiment of this application. As shown in FIG. 14, the communication apparatus includes a processing unit 1101 and a transceiver unit 1102.

In some embodiments of this application, the communication apparatus may be a remote terminal device described above or a chip. The chip may be used in the remote terminal device or the like. In other words, the communication apparatus may be configured to perform steps, functions, or the like performed by the remote terminal device in the foregoing method embodiments.

The processing unit 1101 is configured to: if an RRC connection establishment procedure of the remote terminal device is initialized, start a timer, where an RRC connection of the remote terminal device is an RRC connection between the remote terminal device and a network device via a relay terminal device.

The transceiver unit 1102 is configured to: if the timer expires, send indication information to the relay terminal device, where the indication information indicates the relay terminal device not to forward data corresponding to the remote terminal device, the indication information is used to release a unicast link between the remote terminal device and the relay terminal device, or the indication information indicates to clear a buffer corresponding to the remote terminal device.

In a possible implementation, the transceiver unit 1102 is further configured to send an RRC setup request message to the network device via the relay terminal device.

Still refer to FIG. 14. In some other embodiments of this application, the communication apparatus may be a relay terminal device described above or a chip. The chip may be used in the relay terminal device or the like. In other words, the communication apparatus may be configured to perform steps, functions, or the like performed by the relay terminal device in the foregoing method embodiments.

The transceiver unit 1102 is configured to receive indication information from a remote terminal device, where the indication information indicates the relay terminal device not to forward data corresponding to the remote terminal device, the indication information is used to release a unicast link between the remote terminal device and the relay terminal device, or the indication information indicates to clear a buffer corresponding to the remote terminal device.

The processing unit 1101 is configured to process the indication information.

In a possible implementation, the transceiver unit 1102 is further configured to receive an RRC setup request message from the remote terminal device.

In embodiments of this application, for descriptions about the RRC connection, the timer, the indication information, or the like of the remote terminal device, refer to the descriptions of the foregoing method embodiment (FIG. 2, FIG. 3, FIG. 4, or FIG. 6). Details are not described one by one herein again.

Still refer to FIG. 14. In still some other embodiments of this application, the communication apparatus may be a relay terminal device described above or a chip. The chip may be used in the relay terminal device or the like. In other words, the communication apparatus may be configured to perform steps, functions, or the like performed by the relay terminal device in the foregoing method embodiments.

The transceiver unit 1102 is configured to receive an RRC setup request message from a remote terminal device.

The processing unit 1101 is configured to: start a timer, and if the timer expires, perform any one or more of the following:
determining not to forward data corresponding to the remote terminal device;
releasing a unicast link between the remote terminal device and the relay terminal device; or
clearing a buffer corresponding to the remote terminal device.

For specific descriptions of embodiments of this application, refer to the descriptions in the foregoing method embodiment (as shown in FIG. 5 or FIG. 6). Details are not described one by one herein again.

Still refer to FIG. 14. In still some embodiments of this application, the communication apparatus may be a remote terminal device described above or a chip. The chip may be used in the remote terminal device or the like. In other words, the communication apparatus may be configured to perform steps, functions, or the like performed by the remote terminal device in the foregoing method embodiments.

The transceiver unit 1102 is configured to receive third indication information from a relay terminal device, where the third indication information indicates that an RRC connection between the relay terminal device and a network device is unavailable.

The transceiver unit 1102 is further configured to send first indication information to the relay terminal device, where the first indication information indicates the relay terminal device not to forward data corresponding to the remote terminal device, the first indication information indicates to release a unicast link between the remote terminal device and the relay terminal device, or the first indication information indicates to clear a buffer corresponding to the remote terminal device.

In a possible implementation, the transceiver unit 1102 is further configured to: after the duration, send data to the network device via the relay terminal device.

In a possible implementation, the transceiver unit 1102 is further configured to receive second indication information from the relay terminal device, where the second indication information indicates that the RRC connection between the relay terminal device and the network device is available.

It may be understood that the processing unit 1101 may be configured to control the transceiver unit 1102 to perform the foregoing receiving or sending steps or the like. This is not limited in embodiments of this application.

Still refer to FIG. 14. In still some other embodiments of this application, the communication apparatus may be a relay terminal device described above or a chip. The chip may be used in the relay terminal device or the like. In other words, the communication apparatus may be configured to perform steps, functions, or the like performed by the relay terminal device in the foregoing method embodiments.

The transceiver unit 1102 is configured to send third indication information to a remote terminal device, where the third indication information indicates that a radio resource control RRC connection between the relay terminal device and a network device is unavailable.

The transceiver unit 1102 is further configured to receive first indication information from the remote terminal device, where the first indication information indicates the relay terminal device not to forward data corresponding to the remote terminal device, the first indication information indicates to release a unicast link between the remote terminal device and the relay terminal device, or the first indication information indicates to clear a buffer corresponding to the remote terminal device.

In a possible implementation, the transceiver unit 1102 is further configured to: after the duration, receive data from the remote terminal device.

In a possible implementation, the transceiver unit 1102 is further configured to send second indication information to the remote terminal device, where the second indication information indicates that the RRC connection between the relay terminal device and the network device is available.

In embodiments of this application, for descriptions of each piece of indication information and the like, refer to the descriptions in the foregoing method embodiment (as shown in FIG. 7 or FIG. 8). Details are not described one by one herein again.

It may be understood that specific descriptions of the transceiver unit and the processing unit described in embodiments of this application are merely examples. For specific functions, steps, or the like of the transceiver unit and the processing unit, refer to the foregoing method embodiments. Details are not described herein again.

A transmit end device and a receive end device in embodiments of this application are described above, and possible product forms of the transmit end device and the receive end device are described below. It should be understood that a product in any form that has the function of the transmit end device in FIG. 14 or a product in any form that has the function of the receive end device in FIG. 14 falls within the protection scope of embodiments of this application. It should be further understood that the following descriptions are merely examples, and product forms of the transmit end device and the receive end device in embodiments of this application are not limited thereto.

In a possible implementation, in the communication apparatus shown in FIG. 14, the processing unit 1101 may be one or more processors, and the transceiver unit 1102 may be a transceiver. Alternatively, the transceiver unit 1102 may be a sending unit and a receiving unit. The sending unit may be a transmitter. The receiving unit may be a receiver. The sending unit and the receiving unit are integrated into one device, for example, a transceiver. In embodiments of this application, the processor and the transceiver may be coupled, or the like. A manner of connection between the processor and the transceiver is not limited in embodiments of this application.

As shown in FIG. 15, the communication apparatus 120 includes one or more processors 1220 and a transceiver 1210.

In some embodiments of this application, when the communication apparatus is configured to perform steps, methods, or functions performed by the foregoing remote terminal device, the transceiver 1210 is configured to receive information (for example, an RRC setup message) from a base station via a relay terminal device, receive information (for example, indication information and the like) sent by a relay terminal device, send information (for example, an RRC setup request message) to a base station via a relay terminal device, or send indication information to a relay terminal device, or the like. The processor 1220 is configured to process the foregoing information.

For example, the processor 1220 is configured to start a timer. The transceiver 1210 is configured to send indication information to the relay terminal device, and the like.

For another example, the transceiver 1210 is configured to receive third indication information from the relay terminal device, send first indication information to the relay terminal device, and the like. For example, the processor 1220 is configured to determine, in response to the third indication information, not to send data to the relay terminal device, and the like.

In some other embodiments of this application, when the communication apparatus is configured to perform steps, methods, or functions performed by the foregoing relay terminal device, the transceiver 1210 is configured to receive indication information from a remote terminal device. The processor 1220 is configured to process the indication information. Alternatively, the transceiver 1210 is configured to receive an RRC setup request message from the remote terminal device. The processor 1220 is configured to start a timer, and the like.

It may be understood that for specific descriptions of the processor and the transceiver, refer to the descriptions of the processing unit and the transceiver unit shown in FIG. 14. Details are not described herein again.

Optionally, in each implementation of the communication apparatus shown in FIG. 15, the transceiver may include a receiver and a transmitter. The receiver is configured to perform a receiving function (or operation). The transmitter is configured to perform a transmitting function (or operation). The transceiver is configured to communicate with another device/apparatus through a transmission medium.

Optionally, in a process of performing the foregoing methods, a process of sending information and a process of receiving information in the foregoing methods may be understood as a process of outputting the information by the processor and a process of receiving the input information by the processor. When outputting the foregoing information, the processor outputs the information to a transceiver, so that the transceiver transmits the information. After the information is outputted by the processor, other processing may further need to be performed on the information before the information arrives at the transceiver. Similarly, when the processor receives the input information, the transceiver receives the information, and inputs the information into the processor. Optionally, after the transceiver receives the information, other processing may need to be performed on the information before being the information is input to the processor.

Unless otherwise specified, operations such as transmission, sending, and receiving related to the processor may be more generally understood as operations such as output, receiving, and input of the processor if the operations do not conflict with actual functions or internal logic of the operations in related descriptions, instead of operations such as transmission, sending, and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in embodiments of this application.

Optionally, the communication apparatus 120 may further include one or more memories 1230, configured to store program instructions and/or data. The memory 1230 is coupled to the processor 1220. The coupling in embodiments of this application is indirect coupling or a communication connection between apparatuses, units, or modules for information exchange between the apparatuses, the units, or the modules, and may be in electrical, mechanical, or other forms. The processor 1220 may cooperate with the memory 1230. The processor 1220 may execute the program instructions stored in the memory 1230. Optionally, at least one of the one or more memories may be included in the processor.

A specific connection medium between the transceiver 1210, the processor 1220, and the memory 1230 is not limited in embodiments of this application. In embodiments of this application, the memory 1230, the processor 1220, and the transceiver 1210 are connected through a bus 1240 in FIG. 15. The bus is represented by using a bold line in FIG. 15. A manner of connection between other components is merely an example for description, and imposes no limitation. The bus may be classified into an address bus, a data bus, a control bus, and the like. For ease of representation, only one thick line is used to represent the bus in FIG. 15, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by a combination of hardware and software modules in the processor.

In embodiments of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store program instructions and/or data.

The processor 1220 is mainly configured to: process a communication protocol and communication data, control an entire communication apparatus, perform a software program, and process data of the software program. The memory 1230 is mainly configured to store a software program and data. The transceiver 1210 may include a control circuit and an antenna. The control circuit is mainly configured to perform a conversion between a baseband signal and a radio frequency signal, and process the radio frequency signal. The antenna is mainly configured to receive and send radio frequency signals in a form of an electromagnetic wave. An input/output apparatus, for example, a touchscreen, a display, or a keyboard, is mainly configured to receive data entered by a user and output data to the user.

After the communication apparatus is powered on, the processor 1220 may read the software program in the memory 1230, interpret and execute an instruction of the software program, and process data of the software program. When data needs to be sent wirelessly, the processor 1220 performs baseband processing on the to-be-sent data, and then outputs a baseband signal to a radio frequency circuit. The radio frequency circuit performs radio frequency processing on the baseband signal, and then sends a radio frequency signal in a form of an electromagnetic wave by using an antenna. When data is sent to the communication apparatus, the radio frequency circuit receives a radio frequency signal by using the antenna, converts the radio frequency signal into a baseband signal, and outputs the baseband signal to the processor 1220, and the processor 1220 converts the baseband signal into data and processes the data.

In another implementation, the radio frequency circuit and the antenna may be disposed independent of the processor that performs baseband processing. For example, in a distributed scenario, the radio frequency circuit and the antenna may be separately disposed independent of the communication apparatus.

It may be understood that the communication apparatus shown in embodiments of this application may further include more components than those shown in FIG. 15, or the like. This is not limited in embodiments of this application. The foregoing methods performed by the processor and the transceiver are merely examples. For specific steps performed by the processor and the transceiver, refer to the methods described above.

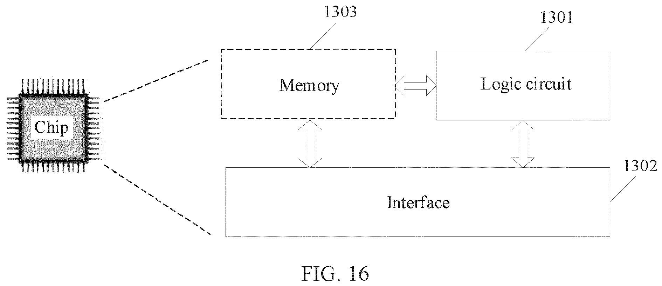

In another possible implementation, in the communication apparatus shown in FIG. 14, the processing unit 1101 may be one or more logic circuits, and the transceiver unit 1102 may be an input/output interface that may also be referred to as a communication interface, an interface circuit, an interface, or the like. Alternatively, the transceiver unit 1102 may be a sending unit and a receiving unit. The sending unit may be an output interface. The receiving unit may be an input interface. The sending unit and the receiving unit are integrated into one unit, for example, an input/output interface. As shown in FIG. 16, the communication apparatus shown in FIG. 16 includes a logic circuit 1301 and an interface 1302. In other words, the processing unit 1101 may be implemented by using the logic circuit 1301, and the transceiver unit 1102 may be implemented by using the interface 1302. The logic circuit 1301 may be a chip, a processing circuit, an integrated circuit, a system on chip (system on chip, SoC), or the like. The interface 1302 may be a communication interface, an input/output interface, a pin, or the like. For example, FIG. 16 is an example in which the foregoing communication apparatus is a chip. The chip includes the logic circuit 1301 and the interface 1302. Optionally, the communication apparatus may further include a memory 1303.

In embodiments of this application, the logic circuit and the interface may be further coupled to each other. A specific manner of connection between the logic circuit and the interface is not limited in embodiments of this application.

For example, when the communication apparatus is configured to perform methods, functions, or steps performed by the foregoing remote terminal device, for example, the logic circuit 1301 is configured to: if an RRC connection establishment procedure is initialized, start a timer, and the interface 1302 is configured to: if the timer expires, output indication information (for example, the indication information shown in FIG. 2). For another example, the interface 1302 is configured to input third indication information (as shown in FIG. 7 or FIG. 8); and the logic circuit 1301 is configured to determine, based on the third indication information, not to send data to a relay terminal device. Alternatively, the interface 1302 is configured to input third indication information; the logic circuit 1301 is configured to obtain first indication information; and the interface 1302 is configured to output the first indication information.

For example, when the communication apparatus is configured to perform methods, functions, or steps performed by the foregoing relay terminal device, the interface 1302 is configured to input indication information; and the logic circuit 1301 is configured to process the indication information (the indication information shown in FIG. 2). For another example, the interface 1302 is configured to output third indication information (as shown in FIG. 7 or FIG. 8), input first indication information, and the like.

It may be understood that the communication apparatus shown in embodiments of this application may implement the method provided in embodiments of this application in a form of hardware, or may implement the method provided in embodiments of this application in a form of software. This is not limited in embodiments of this application.

In embodiments of this application, for descriptions of each piece of indication information, the timer, and the like, refer to the descriptions in the foregoing method embodiments (including FIG. 2 to FIG. 10). Details are not described one by one herein again.

For specific implementations of embodiments shown in FIG. 16, refer to the foregoing embodiments. Details are not described herein again.

An embodiment of this application further provides a wireless communication system. The wireless communication system includes a relay terminal device and a remote terminal device. The relay terminal device and the remote terminal device may be configured to perform the method in any one of the foregoing embodiments.

In addition, this application further provides a computer program. The computer program is used to implement the operation and/or the processing performed by the relay terminal device in the method provided in this application.

This application further provides a computer program. The computer program is used to implement the operation and/or the processing performed by the remote terminal device in the method provided in this application.

This application further provides a computer-readable storage medium. The computer-readable storage medium stores computer code. When the computer code is run on a computer, the computer is enabled to perform the operation and/or the processing performed by the relay terminal device in the method provided in this application.

This application further provides a computer-readable storage medium. The computer-readable storage medium stores computer code. When the computer code is run on a computer, the computer is enabled to perform the operation and/or the processing performed by the remote terminal device in the method provided in this application.

This application further provides a computer program product. The computer program product includes computer code or a computer program. When the computer code or the computer program is run on a computer, the operation or the processing or both performed by the relay terminal device in the method provided in this application are performed.

This application further provides a computer program product. The computer program product includes computer code or a computer program. When the computer code or the computer program is run on a computer, the operation or the processing or both performed by the remote terminal device in the method provided in this application are performed.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, applied to a remote terminal device, wherein the remote terminal device communicates with a network device via a relay terminal device, and the method comprises:
if a radio resource control RRC connection establishment procedure of the remote terminal device is initialized, starting a timer; and
if the timer expires, sending indication information to the relay terminal device, wherein the indication information indicates the relay terminal device not to forward data corresponding to the remote terminal device, the indication information is used to release a unicast link between the remote terminal device and the relay terminal device, or the indication information indicates to clear a buffer corresponding to the remote terminal device.

2. The method according to claim 1, wherein the timer is stopped if any one of the following conditions is satisfied:
an RRC setup message from the network device is received; or
an RRC reject message from the network device is received.

3. The method according to claim 1 or 2, wherein before the sending indication information to the relay terminal device, the method further comprises:
sending an RRC setup request message to the network device via the relay terminal device.

4. The method according to any one of claims 1 to 3, wherein the data corresponding to the remote terminal device is data carried on a signaling radio bearer SRB between the remote terminal device and the network device.

5. A data processing method, applied to a relay terminal device, wherein a remote terminal device communicates with a network device via the relay terminal device, and the method comprises:
receiving indication information from the remote terminal device, wherein the indication information indicates the relay terminal device not to forward data corresponding to the remote terminal device, the indication information is used to release a unicast link between the remote terminal device and the relay terminal device, or the indication information indicates to clear a buffer corresponding to the remote terminal device; and
processing the indication information.

6. The method according to claim 5, wherein the processing the indication information comprises any one or more of the following:
determining not to forward the data corresponding to the remote terminal device;
releasing the unicast link between the remote terminal device and the relay terminal device; or
clearing the buffer corresponding to the remote terminal device.

7. The method according to claim 5 or 6, before the receiving indication information from the remote terminal device, the method further comprises:
receiving data carried on a signaling radio bearer SRB from the remote terminal device.

8. The method according to any one of claims 5 to 7, wherein the data corresponding to the remote terminal device is the data carried on the signaling radio bearer SRB between the remote terminal device and the network device.

9. A data processing method, applied to a relay terminal device, wherein a remote terminal device communicates with a network device via the relay terminal device, and the method comprises:
receiving data carried on a signaling radio bearer SRB of the remote terminal device;
starting a timer; and
if the timer expires, performing any one or more of the following:
determining not to forward data corresponding to the remote terminal device;
releasing a unicast link between the remote terminal device and the relay terminal device; or
clearing a buffer corresponding to the remote terminal device.

10. The method according to claim 9, wherein the timer is stopped if any one of the following conditions is satisfied:
the data that is carried on the signaling radio bearer SRB of the remote terminal deviceand that is from the network device is received; or
the data that is carried on the signaling radio bearer SRB of the remote terminal device and that is from the network device is forwarded to the remote terminal device.

11. A communication apparatus, comprising a processor and a memory, wherein
the processor is configured to store computer-executable instructions; and
the processor is configured to execute the computer-executable instructions, so that the method according to any one of claims 1 to 4 is performed; or
the processor is configured to execute the computer-executable instructions, so that the method according to any one of claims 5 to 10 is performed.

12. A communication apparatus, comprising a logic circuit and an interface, wherein the logic circuit is coupled to the interface;
the interface is configured to input and/or output a code instruction; and
the logic circuit is configured to execute the code instruction, so that the method according to any one of claims 1 to 4 is performed; or
the logic circuit is configured to execute the code instruction, so that the method according to any one of claims 5 to 10 is performed.

13. A computer-readable storage medium, wherein the computer-readable storage medium is configured to store a computer program, and when the computer program is executed, the method according to any one of claims 1 to 4 is performed, or when the computer program is executed, the method according to any one of claims 5 to 10 is performed.

14. A computer program product, wherein the computer program product comprises instructions, and when the instructions are run on a computer, the method according to any one of claims 1 to 4 is performed, or the method according to any one of claims 5 to 10 is performed.
